(19) Europäisches Patentamt / European Patent Office / Office européen des brevets

(11) EP 4 745 927 A1

(12) **EUROPEAN PATENT APPLICATION**

(43) Date of publication:
20.05.2026 Bulletin 2026/21

(21) Application number: 25215143.6

(22) Date of filing: 12.11.2025

(51) International Patent Classification (IPC):
*G07D 7/1205* (2016.01)   *G07D 7/121* (2016.01)

(52) Cooperative Patent Classification (CPC):
**G07D 7/121; G07D 7/1205**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.11.2024 JP 2024198472**

(71) Applicant: **GLORY LTD.**
**Himeji-shi**
**Hyogo 670-8567 (JP)**

(72) Inventor: **SATO, Takeshi**
**Hyogo, 670-8567 (JP)**

(74) Representative: **SSM Sandmair**
**Patentanwälte Rechtsanwalt**
**Partnerschaft mbB**
**Joseph-Wild-Straße 20**
**81829 München (DE)**

(54) **SHEET RECOGNITION UNIT, SHEET RECOGNITION METHOD, AND SHEET RECOGNITION PROGRAM**

(57)     Provided are a sheet recognition unit, a sheet recognition method, and a sheet recognition program capable of simultaneously and easily acquiring visible range data and infrared range data without using a filter configuration that is difficult to manufacture. A sheet recognition unit includes: a light source capable of irradiating a sheet to be recognized with light having a specific wavelength; a light receiving unit that includes a plurality of light receiving elements respectively including a plurality of color filters that transmit infrared light and have different visible light transmission characteristics, receives, at the plurality of light receiving elements, light arriving from the sheet to be recognized, based on the light from the light source, and outputs light detection signals; and a recognition unit that performs arithmetic on light amount data based on the light detection signals output from the light receiving unit, depending on a ratio of genuine reference data to calculate an amount of at least one color in visible light and an amount of infrared light and recognize the sheet to be recognized based on calculated results.

FIG.1

EP 4 745 927 A1

**Description**

TECHNICAL FIELD

The present disclosure relates to a sheet recognition unit, a sheet recognition method, and a sheet recognition program.

BACKGROUND ART

Conventionally, a photoluminescent compound is known as a security element attached to a sheet such as a banknote. The photoluminescent compound is excited by ultraviolet light to generate fluorescence emission or phosphorescence emission. As a method for detecting these characteristics, for example, those described in the following literature are known.

JP 6469370 B describes a device that acquires IR information in addition to visible color information (RGB). During emission of visible light, light (infrared light or ultraviolet light) other than the visible light is simultaneously emitted. As a result, visible color information is acquired, and IR information is acquired as phosphorescence after all lights are turned off. In this way, the color information about the visible light and light other than the visible light is acquired with a small number of lighting times.

JP 6469370 B describes a second embodiment in which four light receiving elements are linearly arranged per pixel of a light receiving unit. Among the four light receiving elements, a first light receiving element is covered with a red color filter (R), a second light receiving element is covered with a green color filter (G), a third light receiving element is covered with a blue color filter (B), and a fourth light receiving element is covered with an infrared color filter (IR). The color filter (R) transmits red light, the color filter (G) transmits green light, and the color filter (B) transmits blue light, but the color filters (R), (G), and (B) do not transmit ultraviolet light and infrared light. The color filter (IR) used here transmits infrared light but does not transmit ultraviolet light.

JP 7473677 B discloses an optical sensor that detects light from a sheet on which at least one type of monochromatic ink among n types of monochromatic ink is printed. The optical sensor includes a light source, a light receiving unit having first to (n-1)-th light receiving elements, a storage unit, and a correction processing unit. The storage unit stores a correction value based on reference data acquired by the light receiving unit independently receiving light emitted from the first to n-th monochromatic ink for each type of monochromatic ink. The correction processing unit executes correction processing on detection data acquired by the light receiving unit receiving light emitted from the sheet irradiated with light from the light source, using a correction value based on an inverse matrix of a matrix obtained by normalizing a predetermined matrix A with n rows and n columns acquired in advance.

CITATION LIST

- Patent Literature

   Patent Literature 1: JP 6469370 B
   Patent Literature 2: JP 7473677 B

SUMMARY OF INVENTION

- Technical Problem

The filter configuration used in the second embodiment in JP 6469370 B enables visible light and infrared light coming from a banknote to be separated and then to be independently and simultaneously received (detected). However, this filter configuration is difficult to manufacture, and has problems in terms of thickness and cost.

The correction processing described in JP 7473677 B makes it possible to collectively receive (detect) visible light and infrared light coming from a banknote without separating the visible light and the infrared light, and to make a separation into a signal amount appropriately to the visible light and a separation into a signal amount appropriately to the infrared light. However, the correction processing using the above-described determinant has room for improvement in terms of the ease of arithmetic processing.

The present disclosure has been made in view of the above circumstances, and an object thereof is to provide a sheet recognition unit, a sheet recognition method, and a sheet recognition program capable of simultaneously and easily acquiring visible range data and infrared range data without using a filter configuration that is difficult to manufacture.

- Solution to Problem

In order to solve the above-described problems and achieve the object, (1) a sheet recognition unit from a first aspect of the present invention includes: a light source capable of irradiating a sheet to be recognized with light having a specific wavelength; a light receiving unit that includes a plurality of light receiving elements respectively including a plurality of color filters that transmit infrared light and have different visible light transmission characteristics, receives, at the plurality of light receiving elements, light arriving from the sheet to be recognized, based on the light from the light source, and outputs light detection signals; and a recognition unit that performs arithmetic on light amount data based on the light detection signals output from the light receiving unit, depending on a ratio of genuine reference data to calculate an amount of at least one color invisible light and an amount of infrared light and recognize the sheet to be recognized based on calculated results.

(2) In the sheet recognition unit described in (1), the plurality of light receiving elements may include a first light receiving element having a color filter that transmits blue light and infrared light, a second light receiving element having a color filter that transmits green light and infrared light, and a third light receiving element having a color filter that transmits red light and infrared light, and the ratio of the genuine reference data may include a ratio of at least two output values among output values of the first light receiving element, the second light receiving element, and the third light receiving element.

(3) In the sheet recognition unit described in (1) or (2), the light having the specific wavelength emitted from the light source may be ultraviolet light, the light receiving unit may receive visible photoluminescence and infrared photoluminescence emitted from the sheet to be recognized, the sheet being irradiated with the ultraviolet light, and output a visible photoluminescence detection signal and an infrared photoluminescence detection signal as the light detection signals, and the recognition unit may recognize the sheet to be recognized, using the visible photoluminescence detection signal and the infrared photoluminescence detection signal output from the light receiving unit.

(4) In the sheet recognition unit described in (3), a genuine sheet irradiated with ultraviolet light may emit visible photoluminescence and infrared photoluminescence in one region, the plurality of light receiving elements may include a first light receiving element having a color filter that transmits blue light and infrared light, a second light receiving element having a color filter that transmits green light and infrared light, and a third light receiving element having a color filter that transmits red light and infrared light, and the ratio of the genuine reference data may include a ratio of at least two output values among output values of the first light receiving element, the second light receiving element, and the third light receiving element at a time when the light receiving unit receives only photoluminescence equivalent to the visible photoluminescence emitted from the genuine sheet, and a ratio of at least two output values among output values of the first light receiving element, the second light receiving element, and the third light receiving element at a time when the light receiving unit receives only photoluminescence equivalent to the infrared photoluminescence emitted from the genuine sheet.

(5) In the sheet recognition unit described in (4), a genuine sheet irradiated with ultraviolet light may emit green photoluminescence and infrared photoluminescence in one region, and when output values of the first light receiving element, the second light receiving element, and the third light receiving element at a time when the light receiving unit receives only photoluminescence equivalent to the green photoluminescence emitted from the genuine sheet are set as $\alpha Bg$, $\alpha Gg$, and $\alpha Rg$, respectively, output values of the first light receiving element, the second light receiving element, and the third light receiving element at a time when the light receiving unit receives only photoluminescence equivalent to the infrared photoluminescence emitted from the genuine sheet are set as $\beta Bir$, $\beta Gir$, and $\beta Rir$, respectively, and output values of the first light receiving element, the second light receiving element, and the third light receiving element at a time when the light receiving unit receives photoluminescence emitted from the sheet to be recognized are set as X, Y, and Z, respectively, the recognition unit may calculate $G\_g$ and $IR\_r$ according to following expressions (I) to (III), and recognize the sheet to be recognized using the calculated $G\_g$ and $IR\_r$.

[Formula 1]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \qquad (I)$$

$$G\_g = Y - IR\_g \qquad (II)$$

$$IR\_r = \frac{Z \times \frac{\alpha Gg}{\alpha Rg} - Y}{\frac{\alpha Gg}{\alpha Rg} - \frac{\beta Gir}{\beta Rir}} \qquad (III)$$

Here, IR_g represents an amount of infrared photoluminescence emitted from the sheet to be recognized in the output value of the second light receiving element at a time when the light receiving unit receives the photoluminescence emitted from the sheet to be recognized, G_g represents an amount of green photoluminescence emitted from the sheet to be recognized in the output value of the second light receiving element at the time when the light receiving unit receives the photoluminescence emitted from the sheet to be recognized, and IR_r represents an amount of infrared photoluminescence emitted from the sheet to be recognized in the output value of the third light receiving element at the time when the light receiving unit receives the photoluminescence emitted from the sheet to be recognized.

(6) In the sheet recognition unit described in (4), a genuine sheet irradiated with ultraviolet light may emit green photoluminescence and infrared photoluminescence in one region, and when output values of the first light receiving element, the second light receiving element, and the third light receiving element at a time when the light receiving unit receives only photoluminescence equivalent to the green photoluminescence emitted from the genuine sheet are set as $\alpha$Bg, $\alpha$Gg, and $\alpha$Rg, respectively, output values of the first light receiving element, the second light receiving element, and the third light receiving element at a time when the light receiving unit receives only photoluminescence equivalent to the infrared photoluminescence emitted from the genuine sheet are set as $\beta$Bir, $\beta$Gir, and $\beta$Rir, respectively, and output values of the first light receiving element, the second light receiving element, and the third light receiving element at a time when the light receiving unit receives photoluminescence emitted from the sheet to be recognized are set as X, Y, and Z, respectively, the recognition unit may calculate G_g and IR_g according to following expressions (I) and (II), and recognize the sheet to be recognized using the calculated G_g and IR_g.

[Formula 2]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \qquad (I)$$

$$G\_g = Y - IR\_g \qquad (II)$$

Here, IR_g represents an amount of infrared photoluminescence emitted from the sheet to be recognized in an output value of the second light receiving element at a time when the light receiving unit receives the photoluminescence emitted from the sheet to be recognized, and G_g represents an amount of green photoluminescence emitted from the sheet to be recognized in the output value of the second light receiving element at the time when the light receiving unit receives the photoluminescence emitted from the sheet to be recognized.

(7) In the sheet recognition unit described in (4), a genuine sheet irradiated with ultraviolet light may emit red photoluminescence and infrared photoluminescence in one region, and when output values of the first light receiving element, the second light receiving element, and the third light receiving element at a time when the light receiving unit receives only photoluminescence equivalent to the red photoluminescence emitted from the genuine sheet are set as $\gamma$Br, $\gamma$Gr, and $\gamma$Rr, respectively, output values of the first light receiving element, the second light receiving element, and the third light receiving element at a time when the light receiving unit receives only photoluminescence equivalent to the infrared photoluminescence emitted from the genuine sheet are set as βBir, βGir, and βRir, respectively, and output values of the first light receiving element, the second light receiving element, and the third light receiving element at a time when the light receiving unit receives photoluminescence emitted from the sheet to be recognized are set as X, Y, and Z, respectively, the recognition unit may calculate R_r and IR_r according to following expressions (IV) and (V), and recognize the sheet to be recognized using the calculated R_r and IR_r.

[Formula 3]

$$IR\_r = \frac{Z \times \frac{\gamma Gr}{\gamma Rr} - Y}{\frac{\gamma Gr}{\gamma Rr} - \frac{\beta Gir}{\beta Rir}} \quad (IV)$$

$$R\_r = Z - IR\_r \quad (V)$$

Here, R_r represents an amount of red photoluminescence emitted from the sheet to be recognized in an output value of the third light receiving element at a time when the light receiving unit receives the photoluminescence emitted from the sheet to be recognized, and IR_r represents an amount of infrared photoluminescence emitted from the sheet to be recognized in the output value of the third light receiving element at the time when the light receiving unit receives the photoluminescence emitted from the sheet to be recognized.

(8) In the sheet recognition unit described in any one of (3) to (7), the recognition unit may recognize the sheet to be recognized using the visible photoluminescence detection signal and the infrared photoluminescence detection signal output from the light receiving unit, based on whether a visible photoluminescence emission amount and an infrared photoluminescence emission amount in the sheet to be recognized are within an allowable range with respect to second reference data related to the visible photoluminescence emission amount and the infrared photoluminescence emission amount in the genuine sheet.

(9) In the sheet recognition unit described in (8), the second reference data may include a ratio between the visible photoluminescence emission amount and the infrared photoluminescence emission amount, and the recognition unit may calculate the ratio between the visible photoluminescence emission amount and the infrared photoluminescence emission amount of the sheet to be recognized, and recognize the sheet to be recognized, based on whether the ratio is within an allowable range with respect to the ratio included in the second reference data.

(10) In the sheet recognition unit described in (8) or (9), the light receiving unit may receive photoluminescence of at least one color among blue, green, or red as the visible photoluminescence and output a photoluminescence detection signal of the at least one color, the second reference data may relate to a photoluminescence emission amount of the at least one color and an infrared photoluminescence emission amount, and the recognition unit may recognize the sheet to be recognized, based on whether the photoluminescence emission amount of the at least one color and the infrared photoluminescence emission amount of the sheet to be recognized are within an allowable range with respect to the second reference data.

(11) In the sheet recognition unit described in (10), the light receiving unit may receive green photoluminescence as the visible photoluminescence and output a green photoluminescence detection signal, the second reference data may relate to a green photoluminescence emission amount and the infrared photoluminescence emission amount, and the recognition unit may recognize the sheet to be recognized, based on whether the green photoluminescence emission amount and the infrared photoluminescence emission amount of the sheet to be recognized are within an allowable range with respect to the second reference data.

(12) In the sheet recognition unit described in (10), the light receiving unit may receive red photoluminescence as the visible photoluminescence and output a red photoluminescence detection signal, the second reference data may relate to a red photoluminescence emission amount and the infrared photoluminescence emission amount, and the recognition unit may recognize the sheet to be recognized, based on whether the red photoluminescence emission amount and the infrared photoluminescence emission amount of the sheet to be recognized are within an allowable range with respect to the second reference data.

(13) In the sheet recognition unit described in (10), the light receiving unit may receive blue photoluminescence as the visible photoluminescence and output a blue photoluminescence detection signal, the second reference data may relate to a blue photoluminescence emission amount and the infrared photoluminescence emission amount, and the recognition unit may recognize the sheet to be recognized, based on whether the blue photoluminescence emission amount and the infrared photoluminescence emission amount of the sheet to be recognized are within an allowable range with respect to the second reference data.

(14) In the sheet recognition unit described in any one of (8) to (13), the light receiving unit may receive near-infrared photoluminescence as the infrared photoluminescence and output a near-infrared photoluminescence detection signal, the second reference data may relate to the visible photoluminescence emission amount and a near-infrared photoluminescence emission amount, and the recognition unit may recognize the sheet to be recognized, based on whether the visible photoluminescence emission amount and the near-infrared photoluminescence emission amount of the sheet to be recognized are within an allowable range with respect to the second reference data.

(15) Further, a sheet handling device from a second aspect of the present disclosure includes the sheet recognition unit in any one of (1) to (14).

(16) A sheet recognition method from a third aspect of the present disclosure includes: a first step of irradiating a sheet to be recognized with light having a specific wavelength from a light source; a second step of receiving light arriving from the sheet to be recognized, based on the light from the light source at a plurality of light receiving elements of a light receiving unit, and outputting light detection signals; and a third step of recognizing the sheet to be recognized, using the light detection signals output from the light receiving unit. The plurality of light receiving elements respectively include a plurality of color filters that transmit infrared light and have different visible transmission characteristics, and in the third step, arithmetic is performed on light amount data based on the light detection signals output from the light receiving unit, depending on a ratio of genuine reference data, an amount of at least one color in visible light and an amount of infrared light are calculated, and the sheet to be recognized is recognized based on calculated results.

(17) A sheet recognition program from a fourth aspect of the present disclosure causes a sheet recognition unit to perform: first processing for irradiating a sheet to be recognized with light having a specific wavelength from a light source; second processing for receiving light arriving from the sheet to be recognized, based on the light from the light source at a plurality of light receiving elements of a light receiving unit, and outputting light detection signals; and third processing for recognizing the sheet to be recognized, using the light detection signals output from the light receiving unit. The plurality of light receiving elements respectively include a plurality of color filters that transmit infrared light and have different visible transmission characteristics, and in the third processing, arithmetic is performed on light amount data based on the light detection signals output from the light receiving unit, depending on a ratio of genuine reference data, an amount of at least one color in visible light and an amount of infrared light are calculated, and the sheet to be recognized is recognized based on calculated results.

- Advantageous Effects of Invention

The present disclosure can provide a sheet recognition unit, a sheet recognition method, and a sheet recognition program capable of simultaneously and easily acquiring visible range data and infrared range data without using a filter configuration that is difficult to manufacture.

BRIEF DESCRIPTION OF DRAWINGS

FIG. 1 is a schematic diagram illustrating an example of a configuration of a sheet recognition unit according to a first embodiment, and is a diagram viewed from an oblique direction;
FIG. 2 is a schematic perspective view describing an example of a configuration of a light receiving unit included in the sheet recognition unit according to the first embodiment;
FIG. 3 is a graph illustrating an example of wavelength characteristics of color filters of the light receiving unit illustrated in FIG. 2;
FIG. 4 is a flowchart describing an example of an operation of the sheet recognition unit according to the first embodiment;
FIG. 5 is a plan view schematically illustrating an example of a genuine banknote, and illustrating a state of visible light irradiation;
FIG. 6 is a plan view schematically illustrating an example of a genuine banknote, and illustrating a state of ultraviolet light irradiation;
FIG. 7 is a flowchart describing an example of an operation of the sheet recognition unit according to the second embodiment;
FIG. 8 is a schematic perspective view illustrating an appearance of an example of a sheet handling device according to a third embodiment;
FIG. 9 is a schematic cross-sectional view describing an example of a configuration of an imaging unit included in a sheet recognition unit according to the third embodiment;
FIG. 10 is a block diagram describing an example of a configuration of the sheet recognition unit according to the third embodiment;

FIG. 11 is a schematic diagram describing an example of a ratio of genuine reference data used for calculation processing executed by the recognition unit of the sheet recognition unit according to the third embodiment in a case of receiving a fluorescent ink emitting fluorescence in green and infrared wavelength bands;

FIG. 12 is a flowchart describing an example of the calculation processing executed by the recognition unit of the sheet recognition unit according to the third embodiment;

FIG. 13 is a schematic diagram describing an example of a green fluorescent component and an infrared fluorescent component included in an output value of each light receiving element in a case of receiving fluorescent inks that emit fluorescence in the green and infrared wavelength bands, and also describing an example of a relationship between the fluorescent components and the ratio of the reference data;

FIG. 14 is a schematic diagram describing an example of the ratio of the genuine reference data used for calculation processing executed by the recognition unit of the sheet recognition unit according to the third embodiment in a case of receiving a fluorescent ink emitting fluorescence in red and infrared wavelength bands; and

FIG. 15 is a schematic diagram describing an example of a red fluorescent component and an infrared fluorescent component included in an output value of each light receiving element in a case of receiving fluorescent inks that emit fluorescence in the red and infrared wavelength bands, and also describing an example of a relationship between the fluorescent components and the ratio of the reference data.

DESCRIPTION OF EMBODIMENTS

Hereinafter, embodiments of a sheet recognition unit, a sheet handling device, a sheet recognition method, and a sheet recognition program of the present disclosure will be described in detail with reference to the drawings. Various sheets applicable as target sheets of the present disclosure include banknotes, checks, vouchers, bills, forms, securities, and card-like media, but hereinafter, the present disclosure will be described using devices for banknotes as an example.

Note that the sheet recognition program may be introduced in advance into the sheet recognition unit and the sheet handling device, or may be provided to an operator with the program being recorded in a computer-readable recording medium or provided via a network.

As described above, the sheet recognition unit and the sheet handling device of the present disclosure may include a storage unit including a storage device such as a semiconductor memory (random-access memory [RAM] or read-only memory [ROM]) and a hard disk.

In the following description, the same reference signs are appropriately used for the same portions or portions having similar functions between different drawings, and repeated description thereof is appropriately omitted. Further, in the drawings illustrating a structure, XYZ coordinate systems orthogonal to each other are appropriately illustrated.

(First Embodiment)

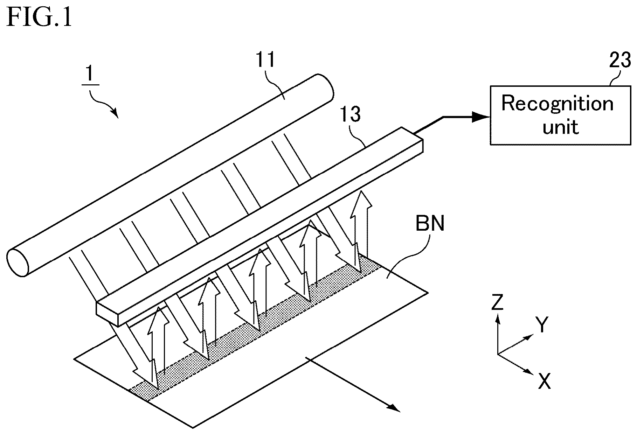

A configuration of the sheet recognition unit according to the present embodiment will be described with reference to FIG. 1.

As illustrated in FIG. 1, the sheet recognition unit 1 according to the present embodiment detects light coming from a banknote BN to be recognized. The sheet recognition unit 1 includes a light source 11, a light receiving unit 13, and a recognition unit 23. The light source 11 is capable of emitting light with a specific wavelength to the banknote BN to be transported. The light receiving unit 13 receives light coming from the banknote BN based on the light from the light source 11, and outputs a light detection signal. The recognition unit 23 recognizes the banknote BN to be recognized, using the light detection signal output from the light receiving unit 13.

Here, the banknote BN to be recognized may be transported in an X direction in an XY plane. A Y direction may correspond to a main scanning direction of the light receiving unit 13, and the X direction may correspond to a sub-scanning direction of the light receiving unit 13.

The light source 11 may be longer than the length of the banknote BN in the Y direction, or may irradiate the banknote BN entirely in the Y direction with light linearly extending along the Y direction. In this case, the light source 11 may include a linear rod-shaped transparent light guide, and light emitting elements (usually, a plurality of light emitting diodes (LEDs), for example) facing at least one of both end surfaces of the light guide. The light source 11 may irradiate the banknote BN with light via the light guide.

The light receiving unit 13 is configured to be able to receive light coming from the banknote BN based on the light from the light source 11. For example, the light receiving unit 13 may be configured to be able to receive fluorescence emitted from the banknote BN while light with a specific wavelength is being emitted. That is, the light receiving unit 13 may be configured to be able to detect fluorescence from the banknote BN. The light receiving unit 13 may be configured to be able to receive reflective light or transmissive light reflected or transmitted by the banknote BN while light with a specific wavelength is being emitted, or may be configured to be able to receive phosphorescence emitted from the banknote BN after light with a specific wavelength is emitted. At this time, the light receiving unit 13 can function as a sensor having sensitivity to at least one of a wavelength band of fluorescence emitted from a fluorescent ink, a wavelength band of reflective light or transmissive light of the light with specific wavelength, or a wavelength band of phosphorescence emitted from the fluorescent ink. The light receiving unit 13 then outputs an electric signal (which may be a digital signal) corresponding to the amount of incident light (light receiving amount). That is, the light detection signal is an electric signal that depends on an amount of incident light coming from the banknote BN.

The light receiving unit 13 includes a plurality of light receiving elements, described later, and the light receiving elements may receive light, convert the light into an electric signal that depends on an incident light amount, and output the electric signal.

The light receiving unit 13 may be longer than the length of the banknote BN in the Y direction, and may receive light transmitted through, reflected from, or emitted from the banknote BN entirely in the Y direction.

The light receiving unit 13 may output an electric signal depending on the amount of incident light as image data. At this time, the light receiving unit 13 may include a plurality of pixels arranged in a row in the Y direction (main scanning direction). That is, the light receiving unit 13 may output an electric signal depending on the amount of incident light at a plurality of channels corresponding to the plurality of pixels (positions in the Y direction (main scanning direction)). Note that the channels (columns) are numbers sequentially allocated to the light receiving elements (imaging elements) in the Y direction. At this time, the light receiving unit 13 may output, as image data, line data that is data related to the light simultaneously received at each channel. The image data of the entire banknote BN may be output by repeating irradiation with light from the light source 11 and reception of light by the light receiving unit 13 while transporting the banknote BN in the X direction (sub-scanning direction).

As described above, the light source 11 and the light receiving unit 13 may acquire the image of the entire banknote BN by continuously and repeatedly executing imaging of a predetermined cycle as one period.

In this specification, one cycle refers to a control pattern in which the timing of turning on and off the light emitting elements in each wavelength band, signal reading, and the like are set. The light detection signal may be acquired from an entire sheet by continuously and repeatedly executing the control pattern of one cycle as one period. One cycle may indicate a periodic control pattern related to turning-on, turning-off, and light reception, the control pattern being set to acquire a reflective light image and/or transmissive light image of the sheet.

The reflective light image is an image based on light emitted from a light source disposed on the same side as the light receiving unit with respect to the sheet and reflected from the sheet. The transmissive light image is an image based on light emitted from a light source disposed on an opposite side from the light receiving unit with respect to the sheet and transmitted through the sheet. Therefore, the reflective light image and the transmissive light image are distinguished from a fluorescent image or a phosphorescent image based on fluorescence or phosphorescence emitted from the sheet.

The image data that can be acquired by the light receiving unit 13 includes a plurality of pixels arranged in a matrix pattern in the Y direction (main scanning direction) and the X direction (sub-scanning direction). An address of each pixel is specified by a channel (column) of the light receiving unit 13 corresponding to the position in the Y direction and a line (row) corresponding to the position in the X direction. The line (row) is a number sequentially allocated to the line data sequentially output from the light receiving unit 13.

The light receiving unit 13 may receive light in a plurality of wavelength bands coming from the banknote BN and output an electric signal (light detection signal) for each of the plurality of wavelength bands. In this case, each pixel may include a plurality of light receiving elements that selectively receive light in different wavelength bands.

Examples of the plurality of wavelength bands in which the light receiving unit 13 can selectively receive light include red (R), green (G), blue (B), and infrared (IR) bands.

In this specification, blue means light (color) having a wavelength of approximately 400 to 500 nm, and may be light (color) having a peak wavelength in this wavelength band. Green means light (color) having a wavelength of approximately 500 to 600 nm, and may be light (color) having a peak wavelength in this wavelength band. Red means light (color) having a wavelength of approximately 600 to 750 nm, and may be light (color) having a peak wavelength in this wavelength band. The infrared light means light having a wavelength of approximately 750 nm or more, and may be light having a peak wavelength in this wavelength band. The near-infrared light means light having a wavelength of approximately 750 to 1500 nm, and may be light having a peak wavelength in this wavelength band.

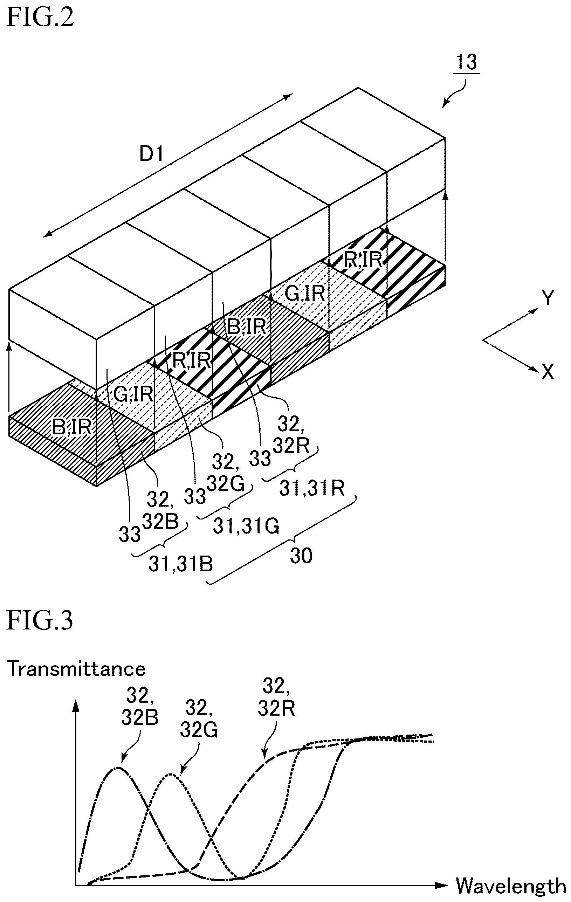

In the present embodiment, as illustrated in FIGS. 2 and 3, the light receiving unit 13 includes a plurality of light receiving elements 31 including a plurality of color filters 32 respectively that transmit infrared light and have different visible light transmission characteristics, and the plurality of light receiving elements 31 receive light arriving from the banknote BN to be recognized, based on light from the light source 11 and output light detection signals respectively. The light receiving unit 13 may collectively receive the light in the visible range and the light in the infrared range emitted from the banknote BN without separating them, and output a light detection signal including a signal value that depends on the light amount of the sum of both the components.

The light receiving unit 13 having such a filter configuration (color filters 32) is easier to be manufactured than a light receiving unit having a conventional filter configuration (for example, the filter configuration used in a second embodiment of JP 6469370 B). Further, as described in detail later, the light amount detected by each light receiving element in each predetermined wavelength band in the visible range, specifically, the amount of blue light, the amount of green light, the amount of red light, and the amount of infrared light can be calculated by relatively simple arithmetic processing using the output values (light amount data) of the light receiving elements that have simultaneously received the light coming from the banknote BN and the reference data. Therefore, according to the present embodiment, visible range data and infrared range data can be simultaneously and easily acquired without using a filter configuration that is difficult to manufacture.

The amount of light, including visible, infrared, and ultraviolet light, as well as other optical phenomena such as photoluminescence, e.g., fluorescence and phosphorescence, is a value that varies depending on the amount of light incident on the light receiving unit (light reception amount), and is also referred to herein as "light amount" or similar terms.

More specifically, as illustrated in FIGS. 2 and 3, the light receiving unit 13 may include a first light receiving element 31B having a color filter 32B that transmits blue light and infrared light, a second light receiving element 31G having a color filter 32G that transmits green light and infrared light, and a third light receiving element 31R having a color filter 32R that transmits red light and infrared light. The first light receiving element 31B, the second light receiving element 31G, and the third light receiving element 31R receive infrared light together with the corresponding visible light. The color filter 32B absorbs green light and red light, the color filter 32G absorbs blue light and red light, and the color filter 32R absorbs blue light and green light.

As illustrated in FIG. 2, the light receiving unit 13 may include a plurality of pixels 30 arranged in a line in a main scanning direction D1 (direction orthogonal to a transport direction of the banknote BN, i.e. a Y direction). Each pixel 30 may include one first light receiving element (imaging element) 31B, one second light receiving element (imaging element) 31G, and one third light receiving element (imaging element) 31R. The first light receiving element 31B, the second light receiving element 31G, and the third light receiving element 31R may be arranged in a line in this order in the main scanning direction D1.

Here, the light receiving element (imaging element) means an element that detects the intensity of light in a predetermined wavelength band (converts into an electric signal). The light receiving element may include a photodetector such as a photodiode, and a color filter (color resist) that is disposed on a light receiving surface of the photodetector and reduces transmission of light in wavelength bands (for example, green and red wavelength bands) excluding predetermined wavelength bands (for example, blue and infrared wavelength bands) to be detected.

As illustrated in FIG. 2, the first light receiving element 31B may include a photodetector 33 and the color filter 32B, the second light receiving element 31G may include the photodetector 33 and the color filter 32G, and the third light receiving element 31R may include the photodetector 33 and the color filter 32R.

Next, the calculation processing executed by the recognition unit 23 using the output value of each light receiving element (light amount data) will be described.

The recognition unit 23 calculates light amount data based on each of the light detection signals output from the light receiving unit 13, depending on the ratio of genuine reference data, and calculates the amount of light of at least one color in visible light and the amount of infrared light to recognize the banknote BN to be recognized, based on the calculation result. By using the reference ratio in this manner, the output value from each light receiving element 31 that collectively receives the light in the visible range and the light in the infrared range emitted from the banknote BN without being separated can be separated into the light amount (signal amount) corresponding to the light in the visible range and the light amount (signal amount) corresponding to the light in the infrared range that are transmitted through the color filter. The arithmetic processing using the ratio of the genuine reference data can be easily performed as compared with the arithmetic processing using the determinant described in JP 7473677 B.

The "reference data" referred to by the recognition unit 23 may be information that defines a reference regarding the amount of light of at least one color in visible light and the amount of infrared light that can be accepted (genuine) as a genuine banknote. The ratio of the genuine reference data may include, for example, a ratio of output values of the plurality of light receiving elements 31 at a time when the light receiving unit 13 receives a light component corresponding to a spectral component included in the visible range in a spectrum measured in a genuine banknote irradiated with light having a specific wavelength, and a ratio of output values of the plurality of light receiving elements 31 at a time when the light receiving unit 13 receives a light component corresponding to a spectral component included in the infrared range in the spectrum measured in the genuine banknote irradiated with the light having a specific wavelength. These output values are not limited to those obtained by actually receiving (detecting) light by the light receiving unit 13 as described above, and may be values calculated (estimated) from a spectrum covering from the visible range to the infrared range, the spectrum being measured in the genuine banknote irradiated with light having a specific wavelength. In the latter case, for example, only the spectral component included in the visible range is extracted (separated) from the measured spectrum, and the extracted spectral component is multiplied by sensitivity characteristics of the plurality of light receiving elements 31, thereby calculating (estimating) the output values of the plurality of light receiving elements 31 at the time when the light receiving unit 13 receives the light component corresponding to the spectral component included in the visible range. In this case, similarly, only the spectral component included in the infrared range is extracted (separated) from the measured spectrum, and the extracted spectral component is multiplied by sensitivity characteristics of the plurality of light receiving elements 31, thereby calculating (estimating) the output values of the plurality of light receiving elements 31 at the time when the light receiving unit 13 receives the light component corresponding to the spectral component included in the infrared range.

Here, the "light of at least one color in the visible light" in "the amount of at least one color in the visible light" calculated by the recognition unit 23 corresponds to light of at least one color in the visible light of a plurality of colors transmitted through the plurality of color filters 32. That is, in a case where the plurality of color filters 32 include the color filter 32B that transmits blue light and infrared light, the color filter 32G that transmits green light and infrared light, and the color filter 32R that transmits red light and infrared light, the "light of at least one color in visible light" corresponds to light of at least one color among blue light, green light, and red light.

As described above, in a case where the plurality of light receiving elements 31 include the first light receiving element 31B having the color filter 32B that transmits blue light and infrared light, the second light receiving element 31G having the color filter 32G that transmits green light and infrared light, and the third light receiving element 31R having the color filter 32R that transmits red light and infrared light, the ratio of the genuine reference data may include the ratio the output values of at least two of the first light receiving element 31B, the second light receiving element 31G, and the third light receiving element 31R. That is, assuming that the output value of the first light receiving element 31B, the output value of the second light receiving element 31G, and the output value of the third light receiving element 31R are a, b, and c, respectively, the ratio of the genuine reference data may include at least one of a : b, b : c, a : c, or a : b : c.

The ratio of the genuine reference data may be the ratio such as a : b, a ratio value such as a/b, or a percentage thereof.

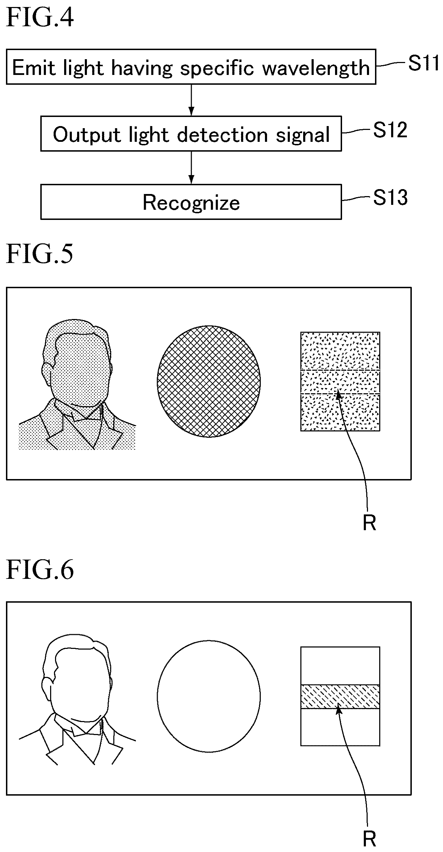

An operation of the sheet recognition unit 1 according to the present embodiment will be described below with reference to FIG. 4.

As illustrated in FIG. 4, the light source 11 irradiates the banknote BN to be recognized with at least light having a specific wavelength (step S11).

The light receiving unit 13 receives light coming from the banknote BN to be recognized, the banknote being irradiated with the light with a specific wavelength, and outputs a light detection signal (step S12).

The light receiving unit 13 includes the plurality of light receiving elements 31 respectively including the plurality of color filters 32 that transmit infrared light and have different visible light transmission characteristics. The light receiving unit 13 then receives, at each light receiving element 31, light arriving from the banknote BN to be recognized, based on the light from the light source 11, and outputs a light detection signal from each light receiving element 31 (see FIGS. 2 and 3).

Thereafter, the recognition unit 23 recognizes the banknote BN to be recognized using the light detection signals output from the light receiving unit 13 (step S13), and the operation of the sheet recognition unit 1 ends. The recognition unit 23 calculates light amount data (output value of each light receiving element 31) based on each of the light detection signals output from the light receiving unit 13, depending on the ratio of genuine reference data, and calculates the amount of light of at least one color in visible light and the amount of infrared light to recognize the banknote BN to be recognized, based on the calculation result.

Note that the recognition unit 23 may be operated by a control unit, described later, executing an appropriate program.

(Second Embodiment)

In the present embodiment, a case where photoluminescence coming from a banknote BN to be recognized is detected will be described.

In this specification, photoluminescence is a concept containing fluorescence and phosphorescence, but hereinafter, a case of detecting fluorescence (photoluminescence that can be detected during irradiation with excitation light) as photoluminescence will be described. That is, in the following description, "photoluminescence", "photoluminescence detection signal", "photoluminescence emission amount", "photoluminescent ink", "visible photoluminescent ink", and "infrared photoluminescent ink" are respectively "fluorescence", "fluorescence detection signal", "fluorescence emission amount", "fluorescent ink", "visible fluorescent ink", and "infrared fluorescent ink".

First, a genuine banknote to be compared with a banknote to be recognized will be described in the present embodiment. As illustrated in FIGS. 5 and 6, fluorescent ink to be authenticated is printed in a predetermined region R on a genuine banknote.

The fluorescent ink contains at least one type of photoluminescent compound, for example, two or more photoluminescent compounds. During irradiation with ultraviolet light as excitation light, fluorescence is emitted at a predetermined wavelength band including at least a visible range and an infrared range. The fluorescence spectrum of the fluorescent ink may have peaks in the visible range and the infrared range, respectively. Hereinafter, the fluorescent ink may be referred to as a special fluorescent ink.

On the other hand, the special fluorescent ink hardly emits light even at the time of irradiation with the visible light, and transmits the visible light. Therefore, the special fluorescent ink is not visually recognized by human eyes in a situation of the irradiation with visible light, for example, under natural light or under general artificial illumination (see FIG. 5). In a case where the special fluorescent ink is irradiated with ultraviolet light, a fluorescent component that emits light in the visible range can be visually recognized by human eyes (see FIG. 6). However, even in this case, a fluorescent component that emits light in the infrared range cannot be visually recognized by human eyes. Therefore, the special fluorescent ink can function as a highly secure security element.

For example, ink containing a mixture of a photoluminescent compound that emits fluorescence in the visible range and a photoluminescent compound that emits fluorescence in the infrared range may be printed on a printing portion of the special fluorescent ink. Alternatively, ink containing the photoluminescent compound that emits fluorescence in the visible range and ink containing the photoluminescent compound that emits fluorescence in the infrared range may be applied to be superimposed on the printing portion.

The sheet recognition unit according to the present embodiment detects fluorescence generated from a banknote BN to be recognized, and includes a light source 11, a light receiving unit 13, and a recognition unit 23 (see FIG. 1) similarly to the sheet recognition unit 1 according to the first embodiment. Light having a specific wavelength emitted from the light source 11 is ultraviolet light. The light receiving unit 13 receives fluorescence of visible light and fluorescence of infrared light emitted from the banknote BN to be recognized, the banknote being irradiated with the ultraviolet light, and outputs a fluorescence detection signal of the visible light and a fluorescence detection signal of the infrared light as a light detection signal. The recognition unit 23 recognizes the banknote BN to be recognized, using the fluorescence detection signal of the visible light and the fluorescence detection signal of the infrared light output from the light receiving unit 13. The sheet recognition unit according to the present embodiment can recognize the banknote BN to be recognized, based on the visible light fluorescence and the infrared light fluorescence emitted from the banknote BN to be recognized.

In the present embodiment, as described above, a genuine banknote irradiated with ultraviolet light may emit fluorescence of visible light and fluorescence of infrared light in the same region R (see FIG. 6), and the plurality of light receiving elements 31 may include the first light receiving element 31B having the color filter 32B that transmits blue light and infrared light, the second light receiving element 31G having the color filter 32G that transmits green light and infrared light, and the third light receiving element 31R having the color filter 32R that transmits red light and infrared light (see FIGS. 2 and 3). The ratio of the genuine reference data may include a ratio (for example, at least one of $a1:b1$, $b1:c1$, $a1:c1$, or $a1:b1:c1$) of at least two output values among an output value $a1$ of the first light receiving element 31B, an output value $b2$ of the second light receiving element 31G, and an output value $c3$ of the third light receiving element 31R at a time when the light receiving unit 13 receives only fluorescence equivalent to the fluorescence of the visible light emitted from a genuine banknote, and a ratio (for example, at least one of $a2:b2$, $b2:c2$, $a2:c2$, or $a2:b2:c2$) of at least two output values among the output value $a2$ of the first light receiving element 31B, the output value $b2$ of the second light receiving element 31G, and the output value $c2$ of the third light receiving element 31R at a time when the light receiving unit 13 receives only fluorescence equivalent to the fluorescence of the infrared light emitted from the genuine banknote. Thus, the authentication of special fluorescent ink can be performed with higher accuracy.

Here, "receiving only the fluorescence equivalent to the fluorescence of the visible light emitted from a genuine banknote" means receiving only a fluorescent component corresponding to a spectral component included in the visible range in a fluorescent spectrum measured in a genuine banknote (genuine special fluorescent ink) irradiated with ultraviolet light. For example, the light receiving unit 13 may alone receive the fluorescence emitted from the visible light fluorescent ink that emits fluorescence at a spectrum approximate to a spectral component included in the visible range in the fluorescent spectrum measured in the genuine special fluorescent ink. More specifically, for example, in a case where a genuine special fluorescent ink contains a mixture of a photoluminescent compound that emits fluorescence in the visible range and a photoluminescent compound that emits fluorescence in the infrared range, a reference pattern printed with only the photoluminescent compound that emits fluorescence in the visible range may be irradiated with ultraviolet light to emit light, and the fluorescence may be received by the light receiving unit 13.

Similarly, "receiving only the fluorescence equivalent to the fluorescence of the infrared light emitted from a genuine banknote" means receiving only a fluorescent component corresponding to a spectral component included in the infrared range in the fluorescent spectrum measured in the genuine banknote (genuine special fluorescent ink) irradiated with ultraviolet light. For example, the light receiving unit 13 may alone receive the fluorescence emitted from the infrared fluorescent ink that emits fluorescence at a spectrum approximate to a spectral component included in the infrared range in the fluorescent spectrum measured in the genuine special fluorescent ink. More specifically, for example, in a case where a genuine special fluorescent ink contains a mixture of a photoluminescent compound that emits fluorescence in the visible range and a photoluminescent compound that emits fluorescence in the infrared range, a reference pattern printed with only the photoluminescent compound that emits fluorescence in the infrared range may be irradiated with ultraviolet light to emit light, and the fluorescence may be received by the light receiving unit 13.

The genuine banknote irradiated with the ultraviolet light may emit green fluorescence and fluorescence of the infrared light in the same region R (see FIG. 6). At this time, the output value of the first light receiving element 31B, the output value of the second light receiving element 31G, and the output value of the third light receiving element 31R at a time when the light receiving unit 13 receives only the fluorescence equivalent to the green fluorescence emitted from the genuine banknote are set as αBg, αGg, and αRg, respectively, the output value of the first light receiving element 31B, the output value of the second light receiving element 31G, and the output value of the third light receiving element 31R at a time when the light receiving unit 13 receives only the fluorescence equivalent to the fluorescence of the infrared light emitted from the genuine banknote are set as βBir, βGir, and βRir, respectively, and the output value of the first light receiving element 31B, the output value of the second light receiving element 31G, and the output value of the third light receiving element 31R at a time when the light receiving unit 13 receives the fluorescence emitted from the banknote BN to be recognized are X, Y, and Z, respectively. In this case, the recognition unit 23 may calculate G_g and IR_r according to the following expressions (I) to (III), and recognize the banknote BN to be recognized using the calculated G_g and IR_r. Thus, the authentication of special fluorescent ink that emits fluorescence in the green and infrared wavelength bands can be performed with high accuracy.

[Formula 4]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \qquad (\text{I})$$

$$G\_g = Y - IR\_g \qquad (\text{II})$$

$$IR\_r = \frac{Z \times \frac{\alpha Gg}{\alpha Rg} - Y}{\frac{\alpha Gg}{\alpha Rg} - \frac{\beta Gir}{\beta Rir}} \qquad (\text{III})$$

Here, IR_g represents the amount of fluorescence of infrared light emitted from the banknote BN to be recognized in the output value of the second light receiving element 31G at the time when the light receiving unit 13 receives the fluorescence emitted from the banknote BN to be recognized, G_g represents the amount of green fluorescence emitted from the banknote BN to be recognized in the output value of the second light receiving element 31G at the time when the light receiving unit 13 receives the fluorescence emitted from the banknote BN to be recognized, and IR_r represents the amount of fluorescence of infrared light emitted from the banknote BN to be recognized in the output value of the third light receiving element 31R at the time when the light receiving unit 13 receives the fluorescence emitted from the banknote BN to be recognized.

In a case where the genuine banknote irradiated with ultraviolet light that emits green fluorescence and fluorescence of infrared light in the same region R, similarly to the above, the output value of the first light receiving element 31B, the output value of the second light receiving element 31G, and the output value of the third light receiving element 31R at the time when the light receiving unit 13 receives only the fluorescence equivalent to the green fluorescence emitted from the genuine banknote are set as αBg, αGg, and αRg, respectively, the output value of the first light receiving element 31B, the output value of the second light receiving element 31G, and the output value of the third light receiving element 31R at the time when the light receiving unit 13 receives only the fluorescence equivalent to the fluorescence of the infrared light emitted from the genuine banknote are set as βBir, βGir, and βRir, respectively, and the output value of the first light receiving element 31B, the output value of the second light receiving element 31G, and the output value of the third light receiving element 31R at the time when the light receiving unit 13 receives the fluorescence emitted from the banknote BN to be recognized are X, Y, and Z, respectively. In this case, the recognition unit 23 may calculate G_g and IR_g according to the following expressions (I) and (II), and recognize the banknote BN to be recognized using the calculated G_g and IR_g. This also enables the authentication of special fluorescent ink that emits fluorescence in the green and infrared wavelength bands with high accuracy.

[Formula 5]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \qquad (I)$$

$$G\_g = Y - IR\_g \qquad (II)$$

Here, IR_g indicates the amount of fluorescence of infrared light emitted from the banknote BN to be recognized in the output value of the second light receiving element 31G at the time when the light receiving unit 13 receives the fluorescence emitted from the banknote BN to be recognized, and G_g indicates the amount of green fluorescence emitted from the banknote BN to be recognized in the output value of the second light receiving element 31G at a time when the light receiving unit 13 receives the fluorescence emitted from the banknote BN to be recognized.

The genuine banknote irradiated with the ultraviolet light may emit red fluorescence and fluorescence of the infrared light in the same region R (see FIG. 6). At this time, the output value of the first light receiving element 31B, the output value of the second light receiving element 31G, and the output value of the third light receiving element 31R at a time when the light receiving unit 13 receives only the fluorescence equivalent to the red fluorescence emitted from the genuine banknote are set as $\gamma Br$, $\gamma Gr$, and $\gamma Rr$, respectively, the output value of the first light receiving element 31B, the output value of the second light receiving element 31G, and the output value of the third light receiving element 31R at the time when the light receiving unit 13 receives only the fluorescence equivalent to the fluorescence of the infrared light emitted from the genuine banknote are set as $\beta Bir$, $\beta Gir$, and $\beta Rir$, respectively, and the output value of the first light receiving element 31B, the output value of the second light receiving element 31G, and the output value of the third light receiving element 31R at the time when the light receiving unit 13 receives the fluorescence emitted from the banknote BN to be recognized are X, Y, and Z, respectively. In this case, the recognition unit 23 may calculate R_r and IR_r according to the following expressions (IV) and (V), and recognize the banknote BN to be recognized using the calculated R_r and IR_r. Thus, the authentication of special fluorescent ink that emits fluorescence in the red and infrared wavelength bands can be performed with high accuracy.

[Formula 6]

$$IR\_r = \frac{Z \times \frac{\gamma Gr}{\gamma Rr} - Y}{\frac{\gamma Gr}{\gamma Rr} - \frac{\beta Gir}{\beta Rir}} \qquad (IV)$$

$$R\_r = Z - IR\_r \qquad (V)$$

Here, R_r indicates the amount of red fluorescence emitted from the banknote BN to be recognized in the output value of the third light receiving element 31R at the time when the light receiving unit 13 receives the fluorescence emitted from the banknote BN to be recognized, and IR_r indicates the amount of fluorescence of infrared light emitted from the banknote BN to be recognized in the output value of the third light receiving element 31R at the time when the light receiving unit 13 receives the fluorescence emitted from the banknote BN to be recognized.

Here, "receiving only the fluorescence equivalent to the green (or red) fluorescence emitted from a genuine banknote" means receiving only a fluorescent component corresponding to a spectral component included in the green (or red) wavelength band in a fluorescent spectrum measured in a genuine banknote (genuine special fluorescent ink) irradiated with ultraviolet light. For example, the light receiving unit 13 may alone receive the fluorescence emitted from the green (or red) fluorescent ink that emits fluorescence at a spectrum approximate to a spectral component included in the green (or red) wavelength bands in the fluorescent spectrum measured in the genuine special fluorescent ink. More specifically, for example, in a case where the genuine special fluorescent ink contains a mixture of a photoluminescent compound that emits fluorescence in the green (or red) wavelength bands and a photoluminescent compound that emits fluorescence in the infrared range, a reference pattern printed with only the photoluminescent compound that emits fluorescence in the green (or red) wavelength bands may be irradiated with ultraviolet light to emit light, and the fluorescence may be received by the light receiving unit 13.

"Receiving only the fluorescence equivalent to the fluorescence of the infrared light emitted from a genuine banknote" means, as described above, receiving only a fluorescent component corresponding to a spectral component included in the infrared range in the fluorescent spectrum measured in the genuine banknote (genuine special fluorescent ink) irradiated with ultraviolet light.

The recognition unit 23 may recognize the banknote BN to be recognized, based on the light amounts themselves according to the above expressions. Further, the recognition unit 23 may recognize the banknote BN to be recognized based on the ratio of the light amount (for example, a ratio between the amount of green fluorescence and the amount of infrared fluorescence, or a ratio between the amount of red fluorescence and the amount of infrared fluorescence) calculated according to the above expressions.

In this manner, the recognition unit 23 may recognize the banknote BN using the calculated light amount itself, or may recognize the banknote BN using an evaluation value (for example, a ratio or a sum) based on the calculated light amount.

In either case, the recognition unit 23 may recognize the banknote BN, for example, determine the authenticity, or presence or absence of a fluorescent ink depending on whether the calculated light amount or the evaluation value thereof is within an allowable range with respect to predetermined reference data.

Here, the "predetermined reference data" referred to by the recognition unit 23 is information for defining a standard (for example, a threshold) regarding a (genuine) light amount acceptable as a genuine banknote. The information may include, for example, an upper limit value and a lower limit value of the light amount or the evaluation value thereof detected in the genuine banknote. When a determination is made whether a certain light amount or an evaluation value thereof is within the allowable range with respect to the reference data, the determination may be made whether the light amount or the evaluation value thereof is between the upper limit value and the lower limit value of a light amount or an evaluation value thereof defined by the reference data.

The recognition unit 23 may recognize the banknote BN to be recognized using the fluorescence detection signal of visible light and the fluorescence detection signal of infrared light output from the light receiving unit 13, based on whether the visible fluorescence emission amount and the infrared fluorescence emission amount in the banknote BN to be recognized are within the allowable range with respect to second reference data regarding a visible fluorescence emission amount and an infrared fluorescence emission amount in a genuine banknote. This also enables the authentication for special fluorescent ink that emits fluorescence in a predetermined wavelength band including at least the visible range and the infrared range. That is, the sheet recognition unit according to the present embodiment makes it possible to mechanically recognize a banknote having a high security property using a photoluminescent compound. As described above, the recognition unit 23 may authenticate the banknote BN to be recognized.

The visible fluorescence emission amount and the infrared fluorescence emission amount in the banknote BN to be recognized can correspond to the visible light amount (the amount of green fluorescence or the amount of red fluorescence) and the amount of infrared fluorescence calculated according to the above expressions. That is, the visible fluorescence emission amount and the infrared fluorescence emission amount of the banknote BN to be recognized can be calculated by the arithmetic processing using the output values of the first to third light receiving elements at the time when the fluorescence generated from the banknote BN to be recognized is received. In other words, in the present embodiment, the recognition unit 23 executes the arithmetic processing on the fluorescence detection signal acquired by the light receiving unit 13 receiving the fluorescence emitted from the banknote BN that is to be recognized and has been irradiated with ultraviolet light, to calculate the visible fluorescence emission amount and the infrared fluorescence emission amount of the banknote BN to be recognized. The recognition unit 23 then may recognize the banknote BN to be recognized, based on whether the calculated visible fluorescence emission amount and infrared fluorescence emission amount are within the allowable range with respect to the second reference data.

The "fluorescence emission amount" is a value indicating the intensity (brightness) of fluorescence.

The light source 11 emits ultraviolet light as excitation light to the banknote BN in the present embodiment. The light source 11 may be disposed on the same side as the light receiving unit 13 with respect to the banknote BN.

In the present embodiment, the light receiving unit 13 is configured to be able to receive fluorescence emitted from a special fluorescent ink of the banknote BN to be recognized while ultraviolet light is being emitted. That is, the light receiving unit 13 is configured to be able to detect a fluorescent component in the visible range, the component being emitted from the special fluorescent ink, and a fluorescent component in the infrared range, the component being emitted from the special fluorescent ink. At this time, the light receiving unit 13 can function as a sensor having sensitivity at least in the wavelength band (the visible range and infrared range) of the fluorescence emitted from the special fluorescent ink. The fluorescence detection signal is an electric signal corresponding to the incident light amount of the fluorescence emitted from the banknote BN during a turn-on period of the ultraviolet light.

In the present embodiment, the "second reference data" that can be referred to by the recognition unit 23 is information for defining a standard (for example, a threshold) regarding the (genuine) visible fluorescence emission amount and the (genuine) infrared fluorescence emission amount acceptable as a genuine banknote. The information may include, for example, an upper limit value and a lower limit value of each of the visible fluorescence emission amount and the infrared fluorescence emission amount. When a determination is made whether a certain fluorescence emission amount is within the allowable range with respect to the second reference data, the determination may be made whether the fluorescence emission amount is between the upper limit value and the lower limit value of the fluorescence emission amount defined by the second reference data.

The second reference data may include a ratio between the visible fluorescence emission amount and the infrared fluorescence emission amount of the genuine banknote. In this case, the recognition unit 23 may calculate the ratio between the visible fluorescence emission amount and the infrared fluorescence emission amount of the banknote to be recognized, and recognize the banknote to be recognized, based on whether the ratio is within an allowable range with respect to the ratio included in the second reference data. Thus, the authentication of special fluorescent ink can be performed with higher accuracy.

Hereinafter, the ratio between the visible fluorescence emission amount and the infrared fluorescence emission amount may be simply referred to as a fluorescence emission ratio. Note that the fluorescence emission ratio may be obtained by dividing the visible fluorescence emission amount by the infrared fluorescence emission amount or by dividing the infrared fluorescence emission amount by the visible fluorescence emission amount. Alternatively, the fluorescence emission ratio may be a percentage thereof.

In the case of using the fluorescence emission ratio, the second reference data may include an upper limit value and a lower limit value of the (genuine) fluorescence emission ratio acceptable as a genuine banknote. The recognition unit 23 may determine whether the fluorescence emission ratio of the banknote to be recognized is between the upper limit value and the lower limit value of the fluorescence emission ratio defined by the second reference data.

As for the special fluorescent ink, the fluorescence spectrum may have a peak in at least one of a blue wavelength band, a green wavelength band, or a red wavelength band. In the visible range, the fluorescence spectrum may have a peak only in one of the blue wavelength band, the green wavelength band, or the red wavelength band.

The light receiving unit 13 may receive at least one of blue, green, or red fluorescence as the visible fluorescence and output a fluorescence detection signal of the at least one color. The second reference data may relate to a fluorescence emission amount of the at least one color and an infrared fluorescence emission amount. The recognition unit 23 may recognize the banknote to be recognized based on whether the fluorescence emission amount of the at least one color and the infrared fluorescence emission amount of the banknote to be recognized are within the allowable range with respect to the second reference data. This makes it possible to authenticate the special fluorescent ink having a peak in at least one of the blue wavelength band, the green wavelength band, or the red wavelength band in the fluorescence spectrum.

More specifically, the light receiving unit 13 may receive the green fluorescence as the visible fluorescence and output a green fluorescence detection signal. The second reference data may relate to a green fluorescence emission amount and an infrared fluorescence emission amount. The recognition unit 23 may recognize the banknote to be recognized based on whether the green fluorescence emission amount and the infrared fluorescence emission amount of the banknote to be recognized are within the allowable range with respect to the second reference data.

The light receiving unit 13 may receive red fluorescence as the visible fluorescence and output a red fluorescence detection signal. The second reference data may relate to a red fluorescence emission amount and an infrared fluorescence emission amount. The recognition unit 23 may recognize the banknote to be recognized based on whether the red fluorescence emission amount and the infrared fluorescence emission amount of the banknote to be recognized are within the allowable range with respect to the second reference data.

Further, the light receiving unit 13 may receive blue fluorescence as the visible fluorescence and output a blue fluorescence detection signal. The second reference data may relate to a blue fluorescence emission amount and an infrared fluorescence emission amount. The recognition unit 23 may recognize the banknote to be recognized based on whether the blue fluorescence emission amount and the infrared fluorescence emission amount of the banknote to be recognized are within the allowable range with respect to the second reference data.

As for the special fluorescent ink, the fluorescence spectrum may have a peak in the infrared region, or may have a peak in the near infrared range.

The light receiving unit 13 may receive near-infrared fluorescence as the infrared fluorescence and output a near-infrared fluorescence detection signal. The second reference data may be related to a visible fluorescence emission amount and a near-infrared fluorescence emission amount. The recognition unit 23 may recognize the banknote to be recognized, based on whether the visible fluorescence emission amount and the near-infrared fluorescence emission amount in the banknote to be recognized are within the allowable range with respect to the second reference data. This makes it possible to authenticate the special fluorescent ink having a peak in the near-infrared wavelength band in the fluorescence spectrum.

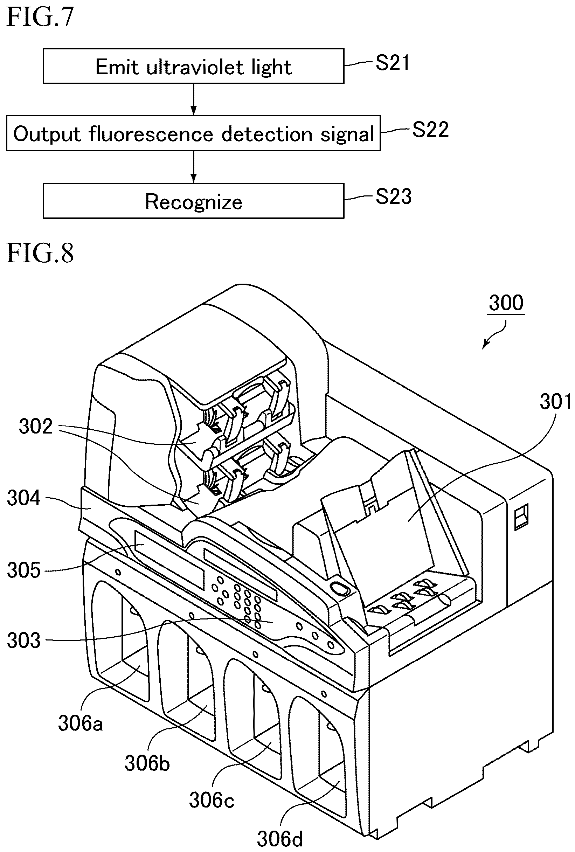

An operation of the sheet recognition unit according to the present embodiment will be described below with reference to FIG. 7.

As illustrated in FIG. 7, first, the light source 11 emits at least ultraviolet light to the banknote BN to be recognized (step S21).

The light receiving unit 13 receives visible fluorescence and infrared fluorescence emitted from the banknote BN to be recognized irradiated with ultraviolet light, and outputs a fluorescence detection signal of visible light and a fluorescence detection signal of infrared light as light detection signals (step S22).

Similarly to the case of the first embodiment, the light receiving unit 13 includes a plurality of light receiving elements 31 each including a plurality of color filters 32 that transmit infrared light and have different visible light transmission characteristics (see FIGS. 2 and 3), and each of the plurality of light receiving elements 31 receives visible fluorescence and infrared fluorescence arriving from the banknote BN to be recognized, based on ultraviolet light from the light source 11, and outputs a visible fluorescence detection signal and an infrared fluorescence detection signal.

Thereafter, the recognition unit 23 recognizes the banknote BN to be recognized using the visible fluorescence detection signal and the infrared fluorescence detection signal output from the light receiving unit 13 (step S23), and the operation of the sheet recognition unit according to the present embodiment ends.

Note that the recognition unit 23 may be operated by a control unit, described later, executing an appropriate program also in the present embodiment.

(Third Embodiment)

A sheet handling device according to the present embodiment may have, for example, a configuration illustrated in FIG. 8. A sheet handling device 300 illustrated in FIG. 8 is a small sheet handling device installed and used on a table. This device includes a sheet recognition unit (not illustrated in FIG. 8), a hopper 301, two rejection units 302, an operation unit 303, four stacking units 306a to 306d, and a display unit 305. The sheet recognition unit executes banknote recognition processing. On the hopper 301, a plurality of banknotes to be handled is placed in a stacked state. The rejection units 302 reject a rejection banknote when the banknote fed from the hopper 301 into a housing 304 is a rejection banknote, such as a counterfeit note or a suspect note. The operation unit 303 is for inputting an instruction from an operator. The stacking units 306a to 306d are for sorting and stacking banknotes whose denominations, authenticity, and fitness have been recognized in the housing 304. The display unit 305 is for displaying information such as recognition and count results of banknotes and the stacking statuses of the stacking units 306a to 306d. Among the four stacking units 306a to 306d, fit notes are stored in the stacking units 306a to 306c, and soiled notes are stored in the stacking unit 306d based on the result of the fitness determination by the sheet recognition unit. A method for distributing banknotes into the stacking units 306a to 306d can be optionally set.

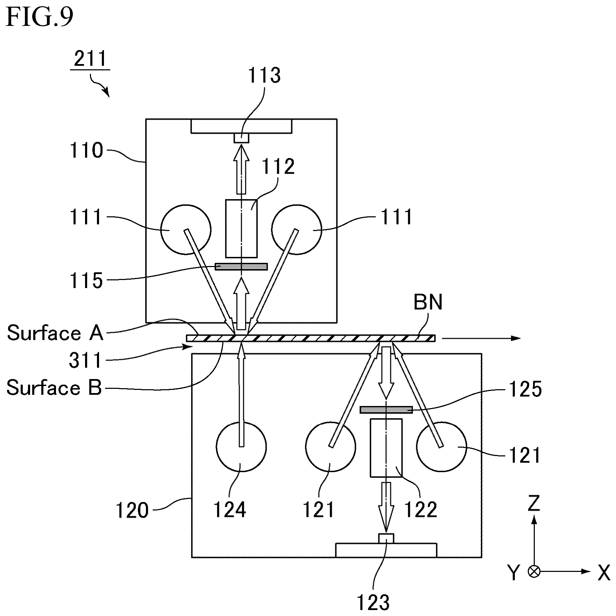

A configuration of an imaging unit that is a main unit of the sheet recognition unit according to the present embodiment will be described below with reference to FIG. 9. As illustrated in FIG. 9, an imaging unit 211 includes an upper unit 110 and a lower unit 120 disposed to face each other. A gap through which a banknote BN is transported in an X direction in an XY plane is formed between the upper unit 110 and the lower unit 120 separated from each other in a Z direction. This gap constitutes a part of a transport path of the sheet handling device according to the present embodiment. The upper unit 110 and the lower unit 120 are positioned on the upper side (+Z direction) and the lower side (-Z direction) of the transport path, respectively. The Y direction corresponds to a main scanning direction of the imaging unit 211, and the X direction corresponds to a sub-scanning direction of the imaging unit 211.

As illustrated in FIG. 9, the upper unit 110 includes two light sources 111 for reflection, a condensing lens 112, a light receiving unit 113, and a UV-cutting film 115. The light source 111 for reflection sequentially irradiates a main surface (hereinafter, surface A) of the banknote BN on the light receiving unit 113 side with irradiation light having different wavelength bands, specifically, infrared light, white light including red light, green light, and blue light, and ultraviolet light as excitation light for fluorescence. The condensing lens 112 condenses light emitted from the light source 111 for reflection and reflected from the surface A of the banknote BN, light emitted from a light source 124 for transmission disposed in the lower unit 120 and transmitted through the banknote BN, and fluorescence emitted on the surface A of the banknote BN. The light receiving unit 113 receives the light condensed by the condensing lens 112 and converts the light into an electric signal. After the electric signal is amplified, the electric signal is A-D converted into digital data and then the digital data is output. Here, the light received by the light receiving unit is also referred to as incident light, and the light emitted from the light source is also referred to as irradiation light. The UV-cutting film 115 absorbs ultraviolet light emitted from the light source 111 for reflection and reflected by the surface A of the banknote BN, and prevents the ultraviolet light from being received by the light receiving unit 113 via the condensing lens 112.

The lower unit 120 includes two light sources 121 for reflection, one light source 124 for transmission, a condensing lens 122, a light receiving unit 123 and a UV-cutting film 125. The light source 121 for reflection sequentially irradiates a main surface (hereinafter, surface B) of the banknote BN on the light receiving unit 123 side with irradiation light having different wavelength bands, specifically, infrared light, white light including red light, green light, and blue light, and ultraviolet light as excitation light for fluorescence. The condensing lens 122 condenses light emitted from the light source 121 for reflection and reflected from the surface B of the banknote BN, and the fluorescence emitted on the surface B of the banknote BN. The light receiving unit 123 receives the light condensed by the condensing lens 122 and converts the light into an electric signal. After the electric signal is amplified, the electric signal is A-D converted into digital data and then the digital data is output. The UV-cutting film 125 absorbs ultraviolet light emitted from the light source 121 for reflection and reflected by the surface B of the banknote BN, and prevents the ultraviolet light from being received by the light receiving unit 123 via the condensing lens 122.

The light source 124 for transmission is disposed on an optical axis of the condensing lens 112 of the upper unit 110. The light emitted from the light source 124 for transmission is partially transmitted through the banknote BN, is condensed by the condensing lens 112 of the upper unit 110, and is detected by the light receiving unit 113. The light source 124 for transmission may sequentially or simultaneously irradiate the surface B of the banknote BN with irradiation light having different wavelength bands.

In this specification, light having different wavelength bands (irradiation light, incident light, etc.) is, for example, light having different colors as visible light, and is light having wavelength bands partially overlapping or light having non-overlapping wavelength bands as infrared light and ultraviolet light.

Each of the light sources 111, 121, and 124 includes a linear light guide (not illustrated) extending in a direction (the main scanning direction, i.e. the Y direction) perpendicular to the sheet surface of FIG. 9, and a plurality of light-emitting diode (LED) elements (not illustrated) disposed at both ends (or one end) of the light guide.

Each of the light sources 111 and 121 may include an LED element that emits infrared light having a peak wavelength of 750 nm or more, an LED element that emits red light (R) having a peak wavelength of 600 nm or more and less than 750 nm, an LED element that emits green light (G) having a peak wavelength of 500 nm or more and less than 600 nm, an LED element that emits blue light (B) having a peak wavelength of 400 nm or more and less than 500 nm, and an LED element that emits ultraviolet light (UV) having a peak wavelength of less than 400 nm. One light source 111 is disposed on each of the upstream side and downstream side in the transport direction with the condensing lens 112 being interposed therebetween. One light source 121 is disposed on each of the upstream side and downstream side in the transport direction with the condensing lens 122 being interposed therebetween.

The light source 124 may include a plurality of LED elements that emit light having peak wavelengths different from each other. Note that the peak wavelength means a wavelength at which light emission intensity is maximum.

As illustrated in FIG. 2, each of the light receiving units 113 and 123 includes a plurality of pixels 30 arranged in a line in the main scanning direction D1(direction orthogonal to the transport direction of the banknote BN, i.e. the Y direction). Each pixel 30 includes one first light receiving element (imaging element) 31B, one second light receiving element (imaging element) 31G, and one third light receiving element (imaging element) 31R. Further, the first light receiving element 31B, the second light receiving element 31G, and the third light receiving element 31R are disposed in a line along the main scanning direction D1 in this order.

Each of the upper unit 110 and the lower unit 120 repeatedly images the banknote BN transported in the transport direction and outputs a signal that depends on a light receiving amount. As a result, the imaging unit 211 acquires an image of the entire banknote BN. Specifically, the imaging unit 211 acquires a transmissive light image of the banknote BN and a reflective light image of the surface A based on the output signal from the upper unit 110, and acquires a reflective light image of the surface B of the banknote BN based on the output signal from the lower unit 120.

The imaging unit 211 further acquires a fluorescence detection signal for the entire banknote BN on each of the surface A and the surface B of the banknote BN. That is, the imaging unit 211 can acquire the fluorescent images of the surface A and the surface B of the banknote BN.

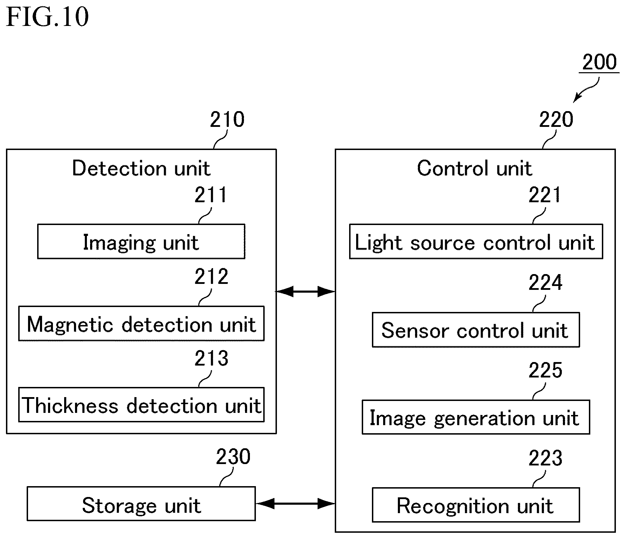

A configuration of the sheet recognition unit according to the present embodiment will be described below with reference to FIG. 10. As illustrated in FIG. 10, a sheet recognition unit 200 according to the present embodiment includes a detection unit 210, a control unit 220, and a storage unit 230.

The control unit 220 is a controller that controls respective units of the sheet recognition unit 200. The control unit 220 includes a program for implementing various types of processing stored in the storage unit 230, a central processing unit (CPU) that executes the program, and various types of hardware (for example, a field programmable gate array (FPGA)) controlled by the CPU. The control unit 220 controls respective units of the sheet recognition unit 200 based on signals output from the respective units of the sheet recognition unit 200 and control signals from the control unit 220 in accordance with the program stored in the storage unit 230. The control unit 220 further has functions of a light source control unit 221, a sensor control unit 224, an image generation unit 225, and a recognition unit 223 in accordance with a program stored in the storage unit 230.

The detection unit 210 includes a magnetic detection unit 212 and a thickness detection unit 213 in addition to the above-described imaging unit 211 along the transport path of a banknote. The imaging unit 211 images a banknote and outputs an image signal (image data) as described above. The magnetic detection unit 212 includes a magnetic sensor (not illustrated) that measures magnetism. The magnetic sensor detects magnetism of magnetic ink, a security thread, etc. printed on a banknote. The magnetic sensor is a magnetic line sensor in which a plurality of magnetic detection elements is arranged in a line. The thickness detection unit 213 includes a thickness detection sensor (not illustrated) that measures a thickness of a banknote. The thickness detection sensor detects tape, multi feed, etc. As for the thickness detection sensor, a sensor disposed at each roller detects a displacement amount during passing of a banknote at rollers facing each other with the transport path interposed therebetween.

The storage unit 230 includes a nonvolatile storage device such as a semiconductor memory or a hard disk, and stores various programs and various data (for example, various reference data) for controlling the sheet recognition unit 200. The storage unit 230 further stores, as imaging parameters, a wavelength band of irradiation light emitted from each of the light sources 111, 121, and 124 during one cycle of imaging by the imaging unit 211, a timing of turning on and off each of the light sources 111, 121, and 124, a value of a forward current flowing through the LED elements of each of the light sources 111, 121, and 124, a timing of reading a signal from each of the upper unit 110 and the lower unit 120, and the like.

Note that the imaging in one cycle refers to an imaging pattern in which the wavelength band of the irradiation light emitted from each of the light sources 111, 121, and 124, and the timing of turning on and off each of the light sources 111, 121, and 124, and signal reading are set. An image of the entire banknote is acquired by continuously and repeatedly executing the imaging in one cycle as one period.

The light source control unit 221 makes dynamic lighting control of each of the light sources 111, 121, and 124 in order to capture an individual image of a banknote obtained using each of the light sources 111, 121, and 124. Specifically, the light source control unit 221 controls turning-on and turning-off of the light sources 111, 121, and 124 based on the timing set as the imaging parameter. This control is made using a mechanical clock that changes depending on the transport speed of a banknote and a system clock that is always output at a constant frequency regardless of the transport speed of a banknote.

The sensor control unit 224 controls a timing of reading a signal from each of the upper unit 110 and the lower unit 120 based on the timing set as the imaging parameter, and reads a signal from each of the upper unit 110 and the lower unit 120 in synchronization with the timing of turning on and off the light sources 111, 121, and 124. This control is performed using the mechanical clock and the system clock. The sensor control unit 224 then sequentially stores the read signals, that is, the line data in a ring buffer (line memory) of the storage unit 230.

The line data means data based on a signal obtained by each of the upper unit 110 and the lower unit 120 performing one imaging, and corresponds to data for one row in a horizontal direction (direction orthogonal to the transport direction of a banknote, i.e., the Y direction) of the acquired image.

The image generation unit 225 has a function of generating an image based on various signals related to a banknote acquired from the detection unit 210. Specifically, the image generation unit 225 first decomposes the data (image signal) stored in the ring buffer into data for each condition of light irradiation and light reception. The image generation unit 225 then executes correction processing for cutting a dark output, adjusting gain, and correcting a bright output level in accordance with the characteristic of each piece of decomposed data, generates various types of image data of the banknote, and stores the image data in the storage unit 230.

The recognition unit 223 recognizes the banknote BN to be recognized, using the fluorescence detection signal acquired by the imaging unit 211.

More specifically, the recognition unit 223 executes the above-described arithmetic processing using the fluorescence detection signal corresponding to a recognition target portion of the fluorescent image to calculate the amount of visible fluorescence (fluorescence emission amount) of a specific color (blue, green, or red) and the amount of infrared fluorescence (fluorescence emission amount) in the banknote to be recognized. The recognition target portion may be set appropriately for the denomination of a banknote.

The recognition unit 223 then authenticates the banknote BN to be recognized, based on whether the calculated amount of visible fluorescence (fluorescence emission amount) and the calculated amount of infrared fluorescence (fluorescence emission amount) of the banknote BN to be recognized are within an allowable range with respect to the second reference data related to an amount of visible fluorescence (fluorescence emission amount) and an amount of infrared fluorescence (fluorescence emission amount) in a genuine banknote.

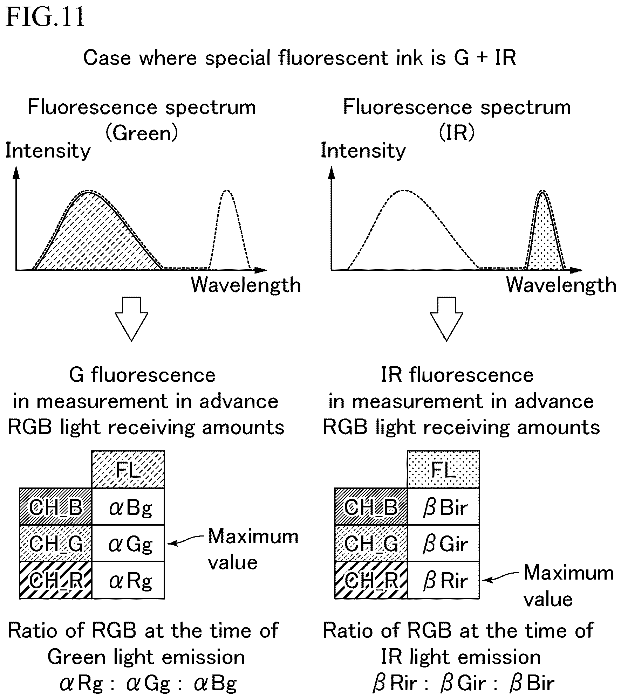

The arithmetic processing executed by the recognition unit 223 will be described more specifically with reference to FIGS. 11 to 15.

Hereinafter, a case of calculating the amount of the green fluorescence and the amount of the infrared fluorescence from the fluorescence emitted from the special fluorescent ink (hereinafter, also referred to as green infrared ink) that emits fluorescence in the green and infrared wavelength bands will be described.

First, before shipment of the sheet recognition unit 200 or at the time of maintenance, a plurality of reference media are imaged in advance by any one light receiving unit of the imaging unit 211. As illustrated in FIG. 11, as the reference media, a medium on which a green fluorescent ink is printed, and a medium on which an infrared fluorescent ink is printed are used. The green fluorescent ink emits fluorescence in a spectrum (see a hatched spectrum in a left graph at the first stage in FIG. 11) approximate to a spectral component having a peak in the green wavelength band among fluorescence spectra (see spectra indicated by broken lines in the right and left graphs of the first stage in FIG. 11) measured from a green infrared ink irradiated with ultraviolet light. The infrared fluorescent ink emits fluorescence in a spectrum (see a hatched spectrum in a right graph at the first stage in FIG. 11) approximating a spectrum component having a peak in the infrared wavelength band among fluorescence spectra (see spectra indicated by broken lines in the right and left graphs at the first stage in FIG. 11) measured from the green infrared ink irradiated with ultraviolet light.

As illustrated on the left at the second stage in FIG. 11, when the measurement result of the medium on which the green fluorescent ink is printed, that is, the output value of the first light receiving element 31B, the output value of the second light receiving element 31G, and the output value of the third light receiving element 31R at a time when the light receiving unit receives only the fluorescence emitted from the green fluorescent ink are set as αBg, αGg, and αRg, respectively, the ratio of the light amount at the time of light emission of the green fluorescent ink is αRg : αGg : αBg.

In the drawings subsequent to FIG. 11, CH_B, CH_G, and CH_R indicate the first light receiving element 31B, the second light receiving element 31G, and the third light receiving element 31R, respectively, and CH indicates a light receiving element.

As shown on the right at the second stage in FIG. 11, when the measurement result of the medium on which the infrared fluorescent ink is printed, that is, the output value of the first light receiving element 31B, the output value of the second light receiving element 31G, and the output value of the third light receiving element 31R at a time when the light receiving unit receives only the fluorescence emitted from the infrared fluorescent ink are set as βBir, βGir, and βRir, respectively, the ratio of the light amount at the time of light emission of the infrared fluorescent ink is βRir : βGir : βBir.

Then, these ratios are stored in the storage unit 230 as ratios of genuine reference data.

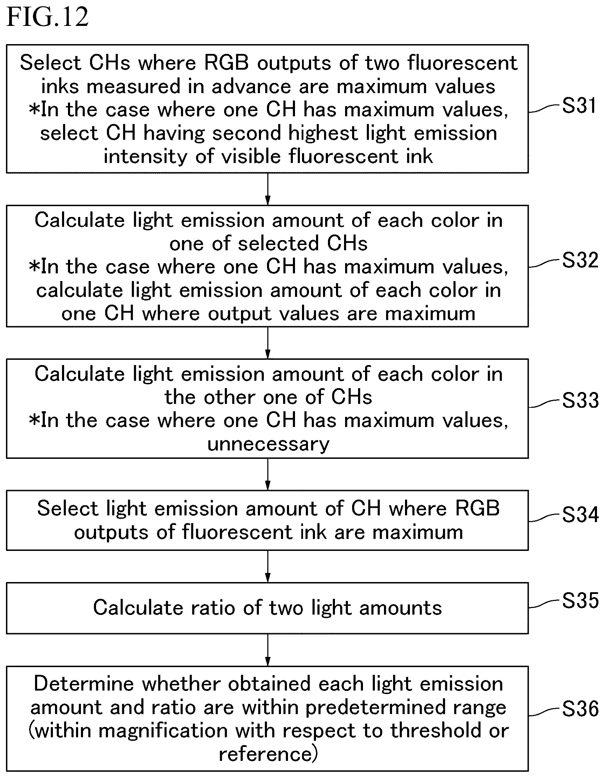

The light receiving element having the largest output value is selected from the RGB outputs from the two fluorescent inks measured in advance (FIG. 12, Step S31). Here, in the green fluorescent ink, the output value αGg of the second light receiving element 31G is assumed to be the maximum value among αBg, αGg, and αRg. In the infrared fluorescent ink, the output value βRir of the third light receiving element 31R is assumed to be the maximum value among βBir, βGir, and βRir. Hereinafter, arithmetic processing is performed using the output values of the selected two light receiving elements.

The fluorescence emitted from the banknote BN to be recognized is imaged by any light receiving unit of the imaging unit 211. The output values of the first light receiving element 31B, the second light receiving element 31G, and the third light receiving element 31R at this time are set as X, Y, and Z, respectively. The light emission amount of each color at output value of one of the two light receiving elements selected in step S31, that is, the amount of green fluorescence and the amount of infrared fluorescence are calculated (FIG. 12, Step S32). First, the amount G_r of the green fluorescence and the amount IR_r of the infrared fluorescence included in the output value Z of the third light receiving element 31R are calculated.

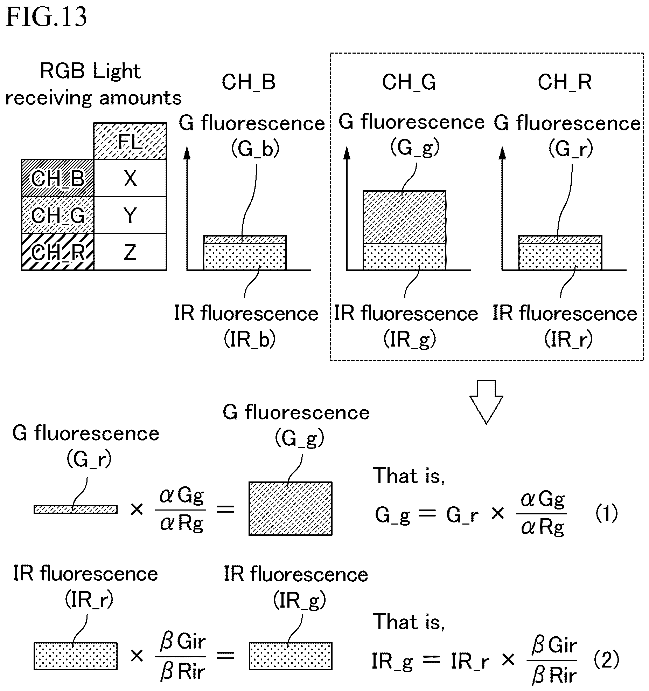

Specifically, as illustrated in FIG. 13, the amount G_g of the green fluorescence included in the output value Y of the second light receiving element 31G and the amount G_r of the green fluorescence included in the output value Z of the third light receiving element 31R are expressed by expression (1) in FIG. 13 using αRg : αGg, which is a ratio of the light amount of the green fluorescent ink at the time of light emission. Similarly, the amount IR_g of the infrared fluorescence included in the output value Y of the second light receiving element 31G and the amount IR_r of the infrared fluorescence included in the output value Z of the third light receiving element 31R are expressed by expression (2) in FIG. 13 using βRir : βGir, which is a ratio of the light amount of the infrared fluorescent ink at the time of light emission.

In order to eliminate the influence of the green fluorescence from the output value Y of the second light receiving element 31G and the output value Z of the third light receiving element 31R, the left side of the following expression (3) may be calculated. As a result, the amount of the green fluorescence is canceled from both output values. Further, the output value Y of the second light receiving element 31G is the sum of the amount G_g of the green fluorescence and the amount IR_g of the infrared fluorescence, and the output value Z of the third light receiving element 31R is the sum of the amount G_r of the green fluorescence and the amount IR_r of the infrared fluorescence. Therefore, when these relationships are substituted into the left side of the following expression (3), the right side of the following expression (3) is obtained.

[Formula 7]

$$Z \times \frac{\alpha G g}{\alpha R g} - Y = (G\_r + IR\_r) \times \frac{\alpha G g}{\alpha R g} - (G\_g + IR\_g) \quad (3)$$

When expression (1) in FIG. 13 is substituted into the right side of expression (3), the following expression (4) is obtained.

[Formula 8]

$$Z \times \frac{\alpha G g}{\alpha R g} - Y = IR\_r \times \frac{\alpha G g}{\alpha R g} - IR\_g \quad (4)$$

When the expression (2) in FIG. 13 is substituted into the right side of the expression (4), the following expression (5) is obtained.

[Formula 9]

$$Z \times \frac{\alpha Gg}{\alpha Rg} - Y = IR\_r \times \frac{\alpha Gg}{\alpha Rg} - IR\_r \times \frac{\beta Gir}{\beta Rir} \qquad (5)$$

When this expression (5) is transformed, the following expression (6) is obtained, and the amount IR_r of the infrared fluorescence included in the output value Z of the third light receiving element 31R is calculated based on the output value Y of the second light receiving element 31G, the output value Z of the third light receiving element 31R, and the ratio of the genuine reference data.
[Formula 10]

$$IR\_r = \frac{Z \times \frac{\alpha Gg}{\alpha Rg} - Y}{\frac{\alpha Gg}{\alpha Rg} - \frac{\beta Gir}{\beta Rir}} \qquad (6)$$

Since the output value Z of the third light receiving element 31R is the sum of the amount G_r of the green fluorescence and the amount IR_r of the infrared fluorescence, the amount G_r of the green fluorescence included in the output value Z of the third light receiving element 31R is calculated according to the above expression (6) and the following expression (7).
[Formula 11]

$$G\_r = Z - IR\_r \qquad (7)$$

The light emission amount of each color at the output value of the other one of the two light receiving elements selected in step S31, that is, the amount of the green fluorescence and the amount of the infrared fluorescence are calculated (FIG. 12, Step S33). Here, the amount G_g of the green fluorescence and the amount IR_g of the infrared fluorescence included in the output value Y of the second light receiving element 31G are calculated.

When these expressions (1) and (2) in FIG. 13 are used, similarly to the above expression (6), the amount IR_g of the infrared fluorescence included in the output value Y of the second light receiving element 31G is calculated based on the output value Y of the second light receiving element 31G, the output value Z of the third light receiving element 31R, and the ratio of the genuine reference data (see the following expression (8)).
[Formula 12]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \qquad (8)$$

Since the output value Y of the second light receiving element 31G is the sum of the amount G_g of the green fluorescence and the amount IR_g of the infrared fluorescence, the amount G_g of the green fluorescence included in the output value Y of the second light receiving element 31G is calculated according to the above expression (8) and the following expression (9).
[Formula 13]

$$G\_g = Y - IR\_g \qquad (9)$$

Although the above expressions (6) to (9) are stored in the storage unit 230, the above expressions (1) to (5) may not be stored in the storage unit 230.

The light emission amount included in the output value of the light receiving element having the maximum output value is selected from the RGB outputs from the two fluorescent inks selected in step S31 and measured in advance (FIG. 12, Step S34). Here, in the green fluorescent ink, since the output value $\alpha Gg$ of the second light receiving element 31G is the maximum value, the amount G_g of the green fluorescence included in the output value Y of the second light receiving element 31G at the time of imaging the banknote BN to be recognized is selected. On the other hand, in the infrared fluorescent ink, since the output value $\beta Bir$ of the third light receiving element 31R is the maximum value, the amount IR_r of the infrared fluorescence included in the output value Z of the third light receiving element 31R at the time of imaging the banknote BN to be recognized is selected.

A ratio between the two light amounts selected in step S34 is calculated (FIG. 12, Step S35). That is, a ratio between the amount G_g of the green fluorescence and the amount IR_r of the infrared fluorescence is calculated.

Then, a determination is made whether each obtained light amount and ratio are within a predetermined range included in the second reference data (within a predetermined magnification range with respect to a threshold or a reference) (FIG. 12, Step S36). Specifically, a determination is made whether the light amount G_g of the green fluorescence, the light amount IR_r of the infrared fluorescence, and the ratio therebetween are within the allowable range with respect to the second reference data.

The light amount IR_g of the infrared fluorescence may be selected instead of the light amount IR_r of the infrared fluorescence, and a determination may be made whether the light amount G_g of the green fluorescence, the light amount IR_g of the infrared fluorescence, and the ratio therebetween are within the allowable range with respect to the second reference data. Also in this case, a similar determination result can be obtained.

Thereafter, a case of calculating the amount of the red fluorescence and the amount of the infrared fluorescence from the fluorescence emitted from the special fluorescent ink (hereinafter, also referred to as red infrared ink) that emits fluorescence in the red and infrared wavelength bands will be described.

First, before shipment of the sheet recognition unit 200 or at the time of maintenance, a plurality of reference media are imaged in advance by any one light receiving unit of the imaging unit 211. The reference media used in this case includes a medium on which a red fluorescent ink is printed, and a medium on which an infrared fluorescent ink is printed. The red fluorescent ink emits fluorescence in a spectrum approximate to a spectral component having a peak in the red wavelength band in a fluorescence spectrum measured in the red infrared ink irradiated with ultraviolet light. The infrared fluorescent ink emits fluorescence in a spectrum approximate to a spectral component having a peak in the infrared wavelength band in a fluorescence spectrum measured in the red infrared ink irradiated with ultraviolet light.

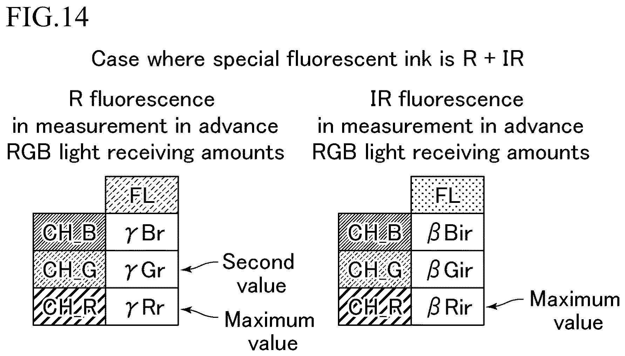

As shown on the left in FIG. 14, when the measurement result of the medium on which the red fluorescent ink is printed, that is, the output value of the first light receiving element 31B, the output value of the second light receiving element 31G, and the output value of the third light receiving element 31R at a time when the light receiving unit receives only the fluorescence emitted from the red fluorescent ink are set as $\gamma Br$, $\gamma Gr$, and $\gamma Rr$, respectively, the ratio of the light amount at the time of light emission of the red fluorescent ink is $\gamma Rr : \gamma Gr : \gamma Br$.

As shown on the right in FIG. 14, when the measurement result of the medium on which the infrared fluorescent ink is printed, that is, the output value of the first light receiving element 31B, the output value of the second light receiving element 31G, and the output value of the third light receiving element 31R at a time when the light receiving unit receives only the fluorescence emitted from the infrared fluorescent ink are set as $\beta Bir$, $\beta Gir$, and $\beta Rir$, respectively, the ratio of the light amount at the time of light emission of the infrared fluorescent ink is $\beta Rir : \beta Gir : \beta Bir$.

Then, these ratios are stored in the storage unit 230 as ratios of genuine reference data.

The light receiving element having the largest output value is selected from the RGB outputs from the two fluorescent inks measured in advance (FIG. 12, Step S31). However, in a case where the output value of the same light receiving element is the maximum, the light receiving element having the maximum output value and the light receiving element having the second largest output value among the RGB outputs of the visible fluorescent ink measured in advance are selected. Here, in the red fluorescent ink, the output value $\gamma Rr$ of the third light receiving element 31R is assumed to be the largest value among $\gamma Br$, $\gamma Gr$, and $\gamma Rr$, and also in the infrared fluorescent ink, the output value $\beta Rir$ of the third light receiving element 31R is assumed to be the largest value among $\beta Bir$, $\beta Gir$, and $\beta Rir$. In the red fluorescent ink, the output value $\gamma Gr$ of the second light receiving element 31G is assumed to be the second largest value among $\gamma Br$, $\gamma Gr$, and $\gamma Rr$. Therefore, hereinafter, the arithmetic processing is performed using the output values of the second light receiving element 31G and the third light receiving element 31R.

The fluorescence emitted from the banknote BN to be recognized is imaged by any light receiving unit of the imaging unit 211. The output values of the first light receiving element 31B, the second light receiving element 31G, and the third light receiving element 31R at this time are set as X, Y, and Z, respectively. The light emission amount of each color at the output value of one of the two light receiving elements selected in step S31, that is, the amount of the red fluorescence and the amount of the infrared fluorescence are calculated (FIG. 12, Step S32). In a case where the output value of the same light receiving element is maximum among the RGB outputs of the two fluorescent inks measured in advance, the amount R_r of the red fluorescence and the amount IR_r of the infrared fluorescence included in the output value Z of the light receiving element having the maximum output value, that is, the third light receiving element 31R are calculated.

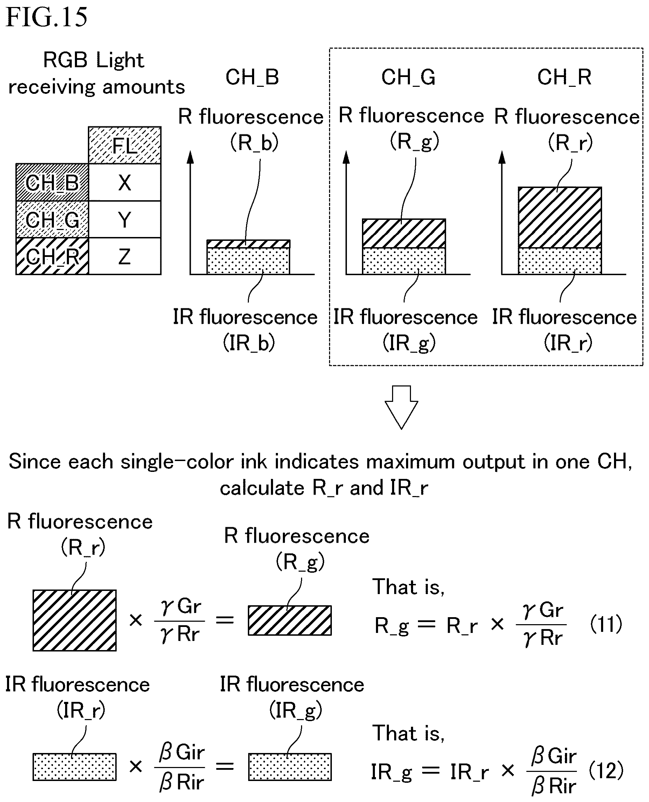

Specifically, as illustrated in FIG. 15, the amount R_g of the red fluorescence included in the output value Y of the second light receiving element 31G and the amount R_r of the red fluorescence included in the output value Z of the third light receiving element 31R are expressed by expression (11) in FIG. 15 using $\gamma Rr : \gamma Gr$, which is the ratio of the light amount of the red fluorescent ink at the time of light emission. Similarly, the amount IR_g of the infrared fluorescence included in the output value Y of the second light receiving element 31G and the amount IR_r of the infrared fluorescence included in the output value Z of the third light receiving element 31R are expressed by expression (12) in FIG. 15 using $\beta Rir : \beta Gir$, which is

the ratio of the light amount of the infrared fluorescent ink at the time of light emission.

In order to eliminate the influence of the red fluorescence from the output value Y of the second light receiving element 31G and the output value Z of the third light receiving element 31R, the left side of the following expression (13) may be calculated. As a result, the amount of the red fluorescence is canceled from both output values. Further, the output value Y of the second light receiving element 31G is the sum of the amount R_g of the red fluorescence and the amount IR_g of the infrared fluorescence, and the output value Z of the third light receiving element 31R is the sum of the amount R_r of the red fluorescence and the amount IR_r of the infrared fluorescence. Therefore, when these relationships are substituted into the left side of the following expression (13), the right side of the following expression (13) is obtained.

[Formula 14]

$$Z \times \frac{\gamma Gr}{\gamma Rr} - Y = (R\_r + IR\_r) \times \frac{\gamma Gr}{\gamma Rr} - (R\_g + IR\_g) \quad (13)$$

When the expression (11) in FIG. 15 is substituted into the right side of the expression (13), the following expression (14) is obtained.

[Formula 15]

$$Z \times \frac{\gamma Gr}{\gamma Rr} - Y = IR\_r \times \frac{\gamma Gr}{\gamma Rr} - IR\_g \quad (14)$$

When the expression (12) in FIG. 15 is substituted into the right side of the expression (14), the following expression (15) is obtained.

[Formula 16]

$$Z \times \frac{\gamma Gr}{\gamma Rr} - Y = IR\_r \times \frac{\gamma Gr}{\gamma Rr} - IR\_r \times \frac{\beta Gir}{\beta Rir} \quad (15)$$

When this expression (15) is transformed, the following expression (16) is obtained, and the amount IR_r of the infrared fluorescence included in the output value Z of the third light receiving element 31R is calculated based on the output value Y of the second light receiving element 31G, the output value Z of the third light receiving element 31R, and the ratio of the genuine reference data.

[Formula 17]

$$IR\_r = \frac{Z \times \frac{\gamma Gr}{\gamma Rr} - Y}{\frac{\gamma Gr}{\gamma Rr} - \frac{\beta Gir}{\beta Rir}} \quad (16)$$

Since the output value Z of the third light receiving element 31R is the sum of the amount R_r of the red fluorescence and the amount IR_r of the infrared fluorescence, the amount R_r of the red fluorescence included in the output value Z of the third light receiving element 31R is calculated according to the above expression (16) and the following expression (17).

[Formula 18]

$$R\_r = Z - IR\_r \quad (17)$$

Although the above expressions (16) and (17) are stored in the storage unit 230, the above expressions (11) to (15) may not be stored in the storage unit 230.

As in step S33 in FIG. 12, the light emission amount of each color at the output value of the other one of the two light receiving elements selected in step S31, that is, the amount R_g of the red fluorescence and the amount IR_g of the infrared fluorescence included in the output value Y of the second light receiving element 31G may be similarly calculated, but may not be calculated.

The light emission amount included in the output value of the light receiving element having the maximum output value is selected from the RGB outputs from the two fluorescent inks selected in step S31 and measured in advance (FIG. 12, Step S34). In the red fluorescent ink, since the output value $\gamma Rr$ of the third light receiving element 31R is the maximum value, the amount R_r of the red fluorescence included in the output value Z of the third light receiving element 31R at the time of imaging the banknote BN to be recognized is selected. Also in the infrared fluorescent ink, since the output value $\beta Rir$ of the third light receiving element 31R is the maximum value, the amount IR_r of the infrared fluorescence included in the output value Z of the third light receiving element 31R at the time of imaging the banknote BN to be recognized is selected.

A ratio between the two light amounts selected in step S34 is calculated (FIG. 12, Step S35). That is, the ratio between the amount R_r of the red fluorescence and the amount IR_r of the infrared fluorescence is calculated.

Then, a determination is made whether each obtained light amount and ratio are within a predetermined range included in the second reference data (within a predetermined magnification range with respect to a threshold or a reference) (FIG. 12, Step S36). Specifically, a determination is made whether the amount R_r of the red fluorescence, the amount IR_r of the infrared fluorescence, and the ratio therebetween are within the allowable range with respect to the second reference data.

(First Modification)

In the above embodiment, the case where the amount of the green or red fluorescence and the amount of the infrared fluorescence are calculated using the output value of the second light receiving element 31G and the output value of the third light receiving element 31R has been described. However, the amount of the blue, green, or red fluorescence and the amount of the infrared fluorescence may be similarly calculated using a combination of the output values of other light receiving elements. For example, by using the output value X of the first light receiving element 31B, the output value Y of the second light receiving element 31G, the ratio $\alpha Gg : \alpha Bg$ of the light amount of the green fluorescent ink at the time of light emission, and the ratio $\beta Gir : \beta Bir$ of the light amount of the infrared fluorescent ink at the time of light emission, the amount IR_g of the infrared fluorescence included in the output value Y of the second light receiving element 31G (see the following expression (21)) and the amount G_g of the green fluorescence included in the output value Y of the second light receiving element 31G (see the following expression (22)) may be calculated. In this case, these expressions may be stored in the storage unit 230.

[Formula 19]

$$IR\_g = \frac{X \times \frac{\alpha Gg}{\alpha Bg} - Y}{\frac{\beta Bir}{\beta Gir} \times \frac{\alpha Gg}{\alpha Bg} - 1} \quad (21)$$

[Formula 20]

$$G\_g = Y - IR\_g \quad (22)$$

(Second Modification)

In the above embodiments, the case where the light receiving unit constitutes the optical line sensor that acquires the optical data (optical characteristics) of a banknote in the entire region in the width direction of the transport path has been described. However, the light receiving unit may be a point sensor that acquires the optical data (optical characteristics) of a banknote at one point in the width direction of the transport path.

(Third Modification)

In the above embodiments, the case where fluorescence is detected as photoluminescence has been described, but phosphorescence (photoluminescence that can be detected after excitation light is turned off) may be used. In this case, a light receiving unit receives phosphorescence emitted from a banknote to be recognized after ultraviolet light as excitation light is turned off. A phosphorescence detection signal is then output. Similarly to the fluorescence detection signal, the recognition processing can be executed using the phosphorescence detection signal. For example, the banknote to be recognized can be recognized based on whether a visible phosphorescence emission amount and an infrared phosphorescence emission amount of the banknote to be recognized are within an allowable range with respect to reference data related to a visible phosphorescence emission amount and an infrared phosphorescence emission amount in a genuine banknote. This makes it possible to authenticate the phosphorescent ink (special phosphorescent ink) that emits phosphorescence in a predetermined wavelength band including at least a visible range and an infrared range after ultraviolet light as excitation light is emitted. Similarly to the special fluorescent ink, the special phosphorescent ink can also function as a security element with high security because a phosphorescent component that emits light in the infrared region cannot be visually recognized by human eyes.

Although the embodiments have been described above with reference to the drawings, the present disclosure is not limited to the above embodiments. The configurations of the respective embodiments may be appropriately combined or modified without departing from the gist of the present disclosure.

INDUSTRIAL APPLICABILITY

As described above, the present disclosure is a technique useful for simultaneously and easily acquiring data in the visible range and data in the infrared range without using a filter configuration that is difficult to manufacture.

REFERENCE SIGNS LIST

1, 200: sheet recognition unit
11, 111, 121, 124: light source
13, 113, 123: light receiving unit
23, 223: recognition unit
30: pixel
31, 31B, 31G, 31R: light receiving element
32, 32B, 32G, 32R: color filter
33: photodetector
110: upper unit
112, 122: condensing lens
115, 125: UV-cutting film
120: lower unit
210: detection unit
211: imaging unit
212: magnetic detection unit
213: thickness detection unit
220: control unit
221: light source control unit
224: sensor control unit
225: image generation unit
230: storage unit
300: sheet handling device
301: hopper
302: rejection unit
303: operation unit
304: housing
305: display unit
306a to 306d: stacking unit
BN: banknote

Claims

1. A sheet recognition unit, comprising:

a light source capable of irradiating a sheet to be recognized with light having a specific wavelength;
a light receiving unit that includes a plurality of light receiving elements respectively including a plurality of color filters that transmit infrared light and have different visible light transmission characteristics, receives, at the plurality of light receiving elements, light arriving from the sheet to be recognized, based on the light from the light source, and outputs light detection signals; and

a recognition unit that performs arithmetic on light amount data based on the light detection signals output from the light receiving unit, depending on a ratio of genuine reference data to calculate an amount of at least one color in visible light and an amount of infrared light and recognize the sheet to be recognized based on calculated results.

2. The sheet recognition unit according to claim 1,

wherein the plurality of light receiving elements include a first light receiving element having a color filter that transmits blue light and infrared light, a second light receiving element having a color filter that transmits green light and infrared light, and a third light receiving element having a color filter that transmits red light and infrared light, and

wherein the ratio of the genuine reference data includes a ratio of at least two output values among output values of the first light receiving element, the second light receiving element, and the third light receiving element.

3. The sheet recognition unit according to claim 1 or 2,

wherein the light having the specific wavelength emitted from the light source is ultraviolet light,

wherein the light receiving unit receives visible photoluminescence and infrared photoluminescence emitted from the sheet to be recognized, the sheet being irradiated with the ultraviolet light, and outputs a visible photoluminescence detection signal and an infrared photoluminescence detection signal as the light detection signals, and

wherein the recognition unit recognizes the sheet to be recognized, using the visible photoluminescence detection signal and the infrared photoluminescence detection signal output from the light receiving unit.

4. The sheet recognition unit according to claim 3,

wherein a genuine sheet irradiated with ultraviolet light emits visible photoluminescence and infrared photoluminescence in one region,

wherein the plurality of light receiving elements includes a first light receiving element having a color filter that transmits blue light and infrared light, a second light receiving element having a color filter that transmits green light and infrared light, and a third light receiving element having a color filter that transmits red light and infrared light, and

wherein the ratio of the genuine reference data includes a ratio of at least two output values among output values of the first light receiving element, the second light receiving element, and the third light receiving element at a time when the light receiving unit receives only photoluminescence equivalent to the visible photoluminescence emitted from the genuine sheet, and a ratio of at least two output values among output values of the first light receiving element, the second light receiving element, and the third light receiving element at a time when the light receiving unit receives only photoluminescence equivalent to the infrared photoluminescence emitted from the genuine sheet.

5. The sheet recognition unit according to claim 4,

wherein a genuine sheet irradiated with ultraviolet light emits green photoluminescence and infrared photoluminescence in one region, and

wherein when output values of the first light receiving element, the second light receiving element, and the third light receiving element at a time when the light receiving unit receives only photoluminescence equivalent to the green photoluminescence emitted from the genuine sheet are set as $\alpha Bg$, $\alpha Gg$, and $\alpha Rg$, respectively,

output values of the first light receiving element, the second light receiving element, and the third light receiving element at a time when the light receiving unit receives only photoluminescence equivalent to the infrared photoluminescence emitted from the genuine sheet are set as $\beta Bir$, $\beta Gir$, and $\beta Rir$, respectively, and

output values of the first light receiving element, the second light receiving element, and the third light receiving element at a time when the light receiving unit receives photoluminescence emitted from the sheet to be recognized are set as X, Y, and Z, respectively,

the recognition unit calculates G_g and IR_r according to following expressions (I) to (III), and recognizes the sheet to be recognized using the calculated G_g and IR_r,

[Formula 1]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \quad (I)$$

$$G\_g = Y - IR\_g \quad (II)$$

$$IR\_r = \frac{Z \times \frac{\alpha Gg}{\alpha Rg} - Y}{\frac{\alpha Gg}{\alpha Rg} - \frac{\beta Gir}{\beta Rir}} \quad (III)$$

where, IR_g represents an amount of infrared photoluminescence emitted from the sheet to be recognized in the output value of the second light receiving element at a time when the light receiving unit receives the photoluminescence emitted from the sheet to be recognized, G_g represents an amount of green photoluminescence emitted from the sheet to be recognized in the output value of the second light receiving element at the time when the light receiving unit receives the photoluminescence emitted from the sheet to be recognized, and IR_r represents an amount of infrared photoluminescence emitted from the sheet to be recognized in the output value of the third light receiving element at the time when the light receiving unit receives the photoluminescence emitted from the sheet to be recognized.

6. The sheet recognition unit according to claim 4,

wherein a genuine sheet irradiated with ultraviolet light emits green photoluminescence and infrared photoluminescence in one region, and
wherein when output values of the first light receiving element, the second light receiving element, and the third light receiving element at a time when the light receiving unit receives only photoluminescence equivalent to the green photoluminescence emitted from the genuine sheet are set as $\alpha Bg$, $\alpha Gg$, and $\alpha Rg$, respectively,
output values of the first light receiving element, the second light receiving element, and the third light receiving element at a time when the light receiving unit receives only photoluminescence equivalent to the infrared photoluminescence emitted from the genuine sheet are set as $\beta Bir$, $\beta Gir$, and $\beta Rir$, respectively, and
output values of the first light receiving element, the second light receiving element, and the third light receiving element at a time when the light receiving unit receives photoluminescence emitted from the sheet to be recognized are set as X, Y, and Z, respectively,
the recognition unit calculates G_g and IR_g according to following expressions (I) and (II), and recognizes the sheet to be recognized using the calculated G_g and IR_g,

[Formula 2]

$$IR\_g = \frac{Z \times \frac{\alpha Gg}{\alpha Rg} - Y}{\frac{\beta Rir}{\beta Gir} \times \frac{\alpha Gg}{\alpha Rg} - 1} \quad (I)$$

$$G\_g = Y - IR\_g \quad (II)$$

where, IR_g represents an amount of infrared photoluminescence emitted from the sheet to be recognized in an output value of the second light receiving element at a time when the light receiving unit receives the photoluminescence emitted from the sheet to be recognized, and G_g represents an amount of green photoluminescence emitted from the sheet to be recognized in the output value of the second light receiving element at the time when the light receiving unit receives the photoluminescence emitted from the sheet to be recognized.

7. The sheet recognition unit according to claim 4,

wherein a genuine sheet irradiated with ultraviolet light emits red photoluminescence and infrared photoluminescence in one region, and
wherein when output values of the first light receiving element, the second light receiving element, and the third light receiving element at a time when the light receiving unit receives only photoluminescence equivalent to the red photoluminescence emitted from the genuine sheet are set as $\gamma Br$, $\gamma Gr$, and $\gamma Rr$, respectively,
output values of the first light receiving element, the second light receiving element, and the third light receiving element at a time when the light receiving unit receives only photoluminescence equivalent to the infrared photoluminescence emitted from the genuine sheet are set as $\beta Bir$, $\beta Gir$, and $\beta Rir$, respectively, and
output values of the first light receiving element, the second light receiving element, and the third light receiving element at a time when the light receiving unit receives photoluminescence emitted from the sheet to be recognized are set as X, Y, and Z, respectively,
the recognition unit calculates R_r and IR_r according to following expressions (IV) and (V), and recognizes the sheet to be recognized using the calculated R_r and IR_r,

[Formula 3]

$$IR\_r = \frac{Z \times \frac{\gamma Gr}{\gamma Rr} - Y}{\frac{\gamma Gr}{\gamma Rr} - \frac{\beta Gir}{\beta Rir}} \qquad (IV)$$

$$R\_r = Z - IR\_r \qquad (V)$$

where, R_r represents an amount of red photoluminescence emitted from the sheet to be recognized in an output value of the third light receiving element at a time when the light receiving unit receives the photoluminescence emitted from the sheet to be recognized, and IR_r represents an amount of infrared photoluminescence emitted from the sheet to be recognized in the output value of the third light receiving element at the time when the light receiving unit receives the photoluminescence emitted from the sheet to be recognized.

8. The sheet recognition unit according to any one of claims 3 to 7,
wherein the recognition unit recognizes the sheet to be recognized using the visible photoluminescence detection signal and the infrared photoluminescence detection signal output from the light receiving unit, based on whether a visible photoluminescence emission amount and an infrared photoluminescence emission amount in the sheet to be recognized are within an allowable range with respect to second reference data related to the visible photoluminescence emission amount and the infrared photoluminescence emission amount in the genuine sheet.

9. The sheet recognition unit according to claim 8,

wherein the second reference data includes a ratio between the visible photoluminescence emission amount and the infrared photoluminescence emission amount, and
wherein the recognition unit calculates the ratio between the visible photoluminescence emission amount and the infrared photoluminescence emission amount of the sheet to be recognized, and recognizes the sheet to be recognized, based on whether the ratio is within an allowable range with respect to the ratio included in the second reference data.

10. The sheet recognition unit according to claim 8 or 9,

wherein the light receiving unit receives photoluminescence of at least one color among blue, green, or red as the visible photoluminescence and outputs a photoluminescence detection signal of the at least one color,
wherein the second reference data relates to a photoluminescence emission amount of the at least one color and an infrared photoluminescence emission amount, and
wherein the recognition unit recognizes the sheet to be recognized, based on whether the photoluminescence emission amount of the at least one color and the infrared photoluminescence emission amount of the sheet to be recognized are within an allowable range with respect to the second reference data.

11. The sheet recognition unit according to claim 10,

wherein the light receiving unit receives green photoluminescence as the visible photoluminescence and outputs a green photoluminescence detection signal,
wherein the second reference data relates to a green photoluminescence emission amount and an infrared photoluminescence emission amount, and
wherein the recognition unit recognizes the sheet to be recognized, based on whether the green photoluminescence emission amount and the infrared photoluminescence emission amount of the sheet to be recognized are within an allowable range with respect to the second reference data.

12. The sheet recognition unit according to claim 10,

wherein the light receiving unit receives red photoluminescence as the visible photoluminescence and outputs a red photoluminescence detection signal,
wherein the second reference data relates to a red photoluminescence emission amount and an infrared photoluminescence emission amount, and
wherein the recognition unit recognizes the sheet to be recognized, based on whether the red photoluminescence emission amount and the infrared photoluminescence emission amount of the sheet to be recognized are within an allowable range with respect to the second reference data.

13. The sheet recognition unit according to claim 10,

wherein the light receiving unit receives blue photoluminescence as the visible photoluminescence and outputs a blue photoluminescence detection signal,
wherein the second reference data relates to a blue photoluminescence emission amount and an infrared photoluminescence emission amount, and
wherein the recognition unit recognizes the sheet to be recognized, based on whether the blue photoluminescence emission amount and the infrared photoluminescence emission amount of the sheet to be recognized are within an allowable range with respect to the second reference data.

14. A sheet recognition method, comprising:

a first step of irradiating a sheet to be recognized with light having a specific wavelength from a light source;
a second step of receiving light arriving from the sheet to be recognized, based on the light from the light source at a plurality of light receiving elements of a light receiving unit, and outputting light detection signals; and
a third step of recognizing the sheet to be recognized, using the light detection signals output from the light receiving unit,
wherein the plurality of light receiving elements respectively include a plurality of color filters that transmit infrared light and have different visible transmission characteristics, and
wherein in the third step, arithmetic is performed on light amount data based on the light detection signals output from the light receiving unit, depending on a ratio of genuine reference data, an amount of at least one color in visible light and an amount of infrared light are calculated, and the sheet to be recognized is recognized based on calculated results.

15. A sheet recognition program that causes a sheet recognition unit to perform:

first processing for irradiating a sheet to be recognized with light having a specific wavelength from a light source;
second processing for receiving light arriving from the sheet to be recognized, based on the light from the light source at a plurality of light receiving elements of a light receiving unit, and outputting light detection signals; and
third processing for recognizing the sheet to be recognized, using the light detection signals output from the light receiving unit,
wherein the plurality of light receiving elements respectively include a plurality of color filters that transmit infrared light and have different visible transmission characteristics, and
wherein in the third processing, arithmetic is performed on light amount data based on the light detection signals output from the light receiving unit, depending on a ratio of genuine reference data, an amount of at least one color in visible light and an amount of infrared light are calculated, and the sheet to be recognized is recognized based on calculated results.

FIG.1

FIG.2

FIG.3

FIG.4

| | |
|---|---|
| Emit light having specific wavelength | S11 |

↓

| | |
|---|---|
| Output light detection signal | S12 |

↓

| | |
|---|---|
| Recognize | S13 |

FIG.5

R

FIG.6

R

FIG.7

```
Emit ultraviolet light ──────── S21
        │
        ▼
Output fluorescence detection signal ── S22
        │
        ▼
    Recognize ──────── S23
```

FIG.8

FIG.9

FIG.10

200

210
**Detection unit**
211
Imaging unit
212
Magnetic detection unit
213
Thickness detection unit

220
**Control unit**
221
Light source control unit
224
Sensor control unit
225
Image generation unit
223
Recognition unit

230
Storage unit

# FIG.11

## Case where special fluorescent ink is G + IR

Fluorescence spectrum
(Green)
Intensity

Wavelength

⬇

G fluorescence
in measurement in advance
RGB light receiving amounts

| | FL |
|---|---|
| CH B | $\alpha$Bg |
| CH G | $\alpha$Gg | ← Maximum value |
| CH R | $\alpha$Rg |

Ratio of RGB at the time of
Green light emission
$\alpha$Rg : $\alpha$Gg : $\alpha$Bg

Fluorescence spectrum
(IR)
Intensity

Wavelength

⬇

IR fluorescence
in measurement in advance
RGB light receiving amounts

| | FL |
|---|---|
| CH B | $\beta$Bir |
| CH G | $\beta$Gir |
| CH R | $\beta$Rir | ← Maximum value |

Ratio of RGB at the time of
IR light emission
$\beta$Rir : $\beta$Gir : $\beta$Bir

## FIG.12

Select CHs where RGB outputs of two fluorescent inks measured in advance are maximum values
*In the case where one CH has maximum values, select CH having second highest light emission intensity of visible fluorescent ink — S31

Calculate light emission amount of each color in one of selected CHs
*In the case where one CH has maximum values, calculate light emission amount of each color in one CH where output values are maximum — S32

Calculate light emission amount of each color in the other one of CHs
*In the case where one CH has maximum values, unnecessary — S33

Select light emission amount of CH where RGB outputs of fluorescent ink are maximum — S34

Calculate ratio of two light amounts — S35

Determine whether obtained each light emission amount and ratio are within predetermined range (within magnification with respect to threshold or reference) — S36

# FIG.13

RGB Light
receiving amounts

CH_B

G fluorescence
(G_b)

CH_G

G fluorescence
(G_g)

CH_R

G fluorescence
(G_r)

IR fluorescence
(IR_b)

IR fluorescence
(IR_g)

IR fluorescence
(IR_r)

G fluorescence
(G_r)

G fluorescence
(G_g)

That is,

$$\times \frac{\alpha\,Gg}{\alpha\,Rg} = \qquad\qquad G\_g = G\_r \times \frac{\alpha\,Gg}{\alpha\,Rg} \quad (1)$$

IR fluorescence
(IR_r)

IR fluorescence
(IR_g)

That is,

$$\times \frac{\beta\,Gir}{\beta\,Rir} = \qquad\qquad IR\_g = IR\_r \times \frac{\beta\,Gir}{\beta\,Rir} \quad (2)$$

FIG.14

Case where special fluorescent ink is R + IR

R fluorescence
in measurement in advance
RGB light receiving amounts

IR fluorescence
in measurement in advance
RGB light receiving amounts

| | |
|---|---|
| FL | |
| CH B | $\gamma$ Br |
| CH G | $\gamma$ Gr | ← Second value
| CH R | $\gamma$ Rr | ← Maximum value

| | |
|---|---|
| FL | |
| CH B | $\beta$ Bir |
| CH G | $\beta$ Gir |
| CH R | $\beta$ Rir | ← Maximum value

## FIG.15

RGB Light receiving amounts

| | FL |
|---|---|
| CH_B | X |
| CH_G | Y |
| CH_R | Z |

CH_B

R fluorescence (R_b)

IR fluorescence (IR_b)

CH_G

R fluorescence (R_g)

IR fluorescence (IR_g)

CH_R

R fluorescence (R_r)

IR fluorescence (IR_r)

⬇

Since each single-color ink indicates maximum output in one CH, calculate R_r and IR_r

R fluorescence (R_r)

$\times \dfrac{\gamma Gr}{\gamma Rr} =$ R fluorescence (R_g)

That is,

$$R\_g = R\_r \times \frac{\gamma Gr}{\gamma Rr} \quad (11)$$

IR fluorescence (IR_r)

$\times \dfrac{\beta Gir}{\beta Rir} =$ IR fluorescence (IR_g)

That is,

$$IR\_g = IR\_r \times \frac{\beta Gir}{\beta Rir} \quad (12)$$

Europäisches
Patentamt

European
Patent Office

Office européen
des brevets

**EUROPEAN SEARCH REPORT**

Application Number

**EP 25 21 5143**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/225215 A1 (YAMAGUCHI YOSHIKI [JP] ET AL) 4 August 2016 (2016-08-04) <br> * paragraphs [0040] - [0169] * <br> * figures 1-16 * | 1-15 | INV. <br> G07D7/1205 <br> G07D7/121 |
| | ----- | | |
| A | EP 3 197 142 A1 (GLORY KOGYO KK [JP]) 26 July 2017 (2017-07-26) <br> * paragraphs [0034] - [0144] * <br> * figures 1-15 * | 1-15 | |
| | ----- | | |

TECHNICAL FIELDS
SEARCHED (IPC)

G07D

The present search report has been drawn up for all claims

| Place of search | Date of completion of the search | Examiner |
|---|---|---|
| The Hague | 10 March 2026 | Bauer, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5143

10-03-2026

| Patent document cited in search report | | Publication date | Patent family member(s) | | Publication date |
|---|---|---|---|---|---|
| US 2016225215 | A1 | 04-08-2016 | CN | 105556578 A | 04-05-2016 |
| | | | EP | 3054427 A1 | 10-08-2016 |
| | | | JP | 6088060 B2 | 01-03-2017 |
| | | | JP | WO2015045186 A1 | 09-03-2017 |
| | | | RU | 2016109657 A | 22-09-2017 |
| | | | US | 2016225215 A1 | 04-08-2016 |
| | | | WO | 2015045186 A1 | 02-04-2015 |
| EP 3197142 | A1 | 26-07-2017 | EP | 3197142 A1 | 26-07-2017 |
| | | | JP | 6633268 B2 | 22-01-2020 |
| | | | JP | 2016053783 A | 14-04-2016 |
| | | | US | 2017276543 A1 | 28-09-2017 |
| | | | WO | 2016035760 A1 | 10-03-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6469370 B

- JP 7473677 B